# EUROPEAN PATENT APPLICATION

(11) **EP 4 588 718 A1**
(43) Date of publication of application: **23.07.2025**
(21) Application number: 23865580.7
(22) Date of filing: 13.09.2023
(51) Int. Cl.: B60N 2/90, A47C 7/74, B60N 2/22

(54) **SEAT SYSTEM**

(30) Priority: 14.09.2022 US 202263375626 P; 04.10.2022 US 202263378260 P
(71) Applicant: TS Tech Co., Ltd., Asaka-shi Saitama 351-0012 (JP)
(72) Inventor: TANABE, Jinichi, Shioya-gun, Tochigi 329-1217 (JP); OZAKI, Takuya, Shioya-gun, Tochigi 329-1217 (JP); ITO, Takayoshi, Shioya-gun, Tochigi 329-1217 (JP)
(74) Representative: Grünecker Patent- und Rechtsanwälte PartG mbB
(86) International application number: PCT/JP2023/033461
(87) International publication number: WO 2024/058231

(57) **Abstract**

A seat system capable of improving the comfort and convenience of a seated occupant by controlling a conveyance seat according to the state of the seated occupant is provided. A seat system (S1) includes a conveyance seat (S) and a wearable device (W) which detects biometric information of the seated occupant. The conveyance seat (S) includes a seat body which has a seat back (1), a seat cushion (2), and a headrest (3), a seat drive unit (6) which changes the posture of the seat back (1) and the seat cushion (2), a functional member that is provided in the seat body, and a control unit (8) which controls the seat drive unit (6) and the functional member. The control unit (8) includes an acquisition unit which acquires biometric information acquired from the wearable device (W) and controls the seat drive unit (6) and the functional member based on the biometric information acquired by the acquisition unit.

## Description

### TECHNICAL FIELD

The present invention relates to a seat system, and more particularly to a seat system including a seat body and a wearable device.

### BACKGROUND ART

Conventionally, wearable devices that are worn on a user's arm and are capable of detecting the user's pulse rate and pulse pattern are known.

For example, PATENT LITERATURE 1 discloses a vehicle air conditioner that detects user's biometric information using a wearable device and performs pre-air conditioning when the user is fatigued or drowsy.

### CITATION LIST

### PATENT LITERATURE

PATENT LITERATURE 1: JP 2020-083157 A

### SUMMARY OF INVENTION

### TECHNICAL PROBLEM

However, in the vehicle air conditioner of PATENT LITERATURE 1, the seat body was not driven in order to cool or heat the air around the seat body based on the biometric information acquired from the wearable device. Therefore, there is room for consideration of controlling conveyance seats using biometric information obtained from wearable devices.

The present invention has been made in view of the above-described problems and an object of the present invention is to provide a seat system capable of improving the comfort and convenience of a seated occupant by controlling a conveyance seat according to the state of the seated occupant.

### SOLUTION TO PROBLEM

According to the seat system of the present invention, the above-described problems are solved by a seat system including: a conveyance seat which includes a seat body; and a wearable device which is worn by a seated occupant and detects biometric information of the seated occupant, wherein the conveyance seat includes the seat body which has a seat back, a seat cushion, and a headrest, a seat drive unit which changes the posture of the seat back and the seat cushion, a functional member that is provided in the seat body, and a control unit which controls the seat drive unit and the functional member, wherein the functional member is at least one of a movable portion which moves a part of the seat body between a normal position and a protruding position protruding toward the seated occupant side in relation to the normal position, a sound output unit which outputs sound, a vibration unit which applies a vibration to the seated occupant, and an air conditioning unit which blows air toward the seated occupant, and wherein the control unit includes an acquisition unit which acquires the biometric information acquired from the wearable device and controls the seat drive unit and the functional member based on the biometric information acquired by the acquisition unit.

With the above-described configuration, it is possible to improve the comfort and convenience of the seated occupant by controlling the conveyance seat according to the state of the seated occupant. It is possible to improve the comfort and convenience of the seated occupant by controlling the functional member while changing the posture of the seat body using the seat drive unit based on the biometric information acquired from the wearable device.

At this time, the functional member may be an air conditioning unit provided in the seat back or the seat cushion, and the control unit may include an emotion estimation unit which estimates the emotion of the seated occupant based on the biometric information acquired by the acquisition unit, and control the air conditioning unit to emit a fragrance toward the seated occupant when an emotion index of the seated occupant estimated by the emotion estimation unit is equal to or higher than a threshold value.

With the above-described configuration, since the posture of the seat body is changed and fragrant air having a relaxing effect can be blown toward the seated occupant when the seated occupant is in an excited state, it is possible to calm him or her down.

At this time, the functional member may be an air conditioning unit provided in the seat back or the seat cushion, and the control unit may include a physical condition estimation unit which estimates a physical condition of the seated occupant based on the biometric information acquired by the acquisition unit, and control the air conditioning unit to blow cool air or warm air toward the seated occupant when the physical condition index of the seated occupant estimated by the physical condition estimation unit is equal to or higher than a first threshold value.

With the above-described configuration, since the posture of the seat body is changed and cool air or warm air is blown toward the seated occupant when there is a risk of poor physical condition from the biometric information of the seated occupant, it is possible to relieve the symptoms of the seated occupant.

At this time, the functional member may include a notification unit which is provided in the seat body or a vehicle equipped with the seat body to make an emergency notification to the outside of the vehicle, and the control unit may control the notification unit to make the emergency notification to the outside of the vehicle when the physical condition index of the seated occupant estimated by the physical condition estimation unit is equal to or higher than a second threshold value higher than the first threshold value.

With the above-described configuration, when the seated occupant's pulse or blood pressure indicates a high level of severity, it is possible to automatically make an emergency notification to the vehicle.

At this time, the functional member may be the sound output unit provided in the headrest, and the control unit may include an emotion estimation unit which estimates the emotion of the seated occupant based on the biometric information acquired by the acquisition unit, and control the sound output unit to output a voice related to an emotion index of the seated occupant when the emotion index of the seated occupant estimated by the emotion estimation unit is equal to or higher than a threshold value.

With the above-described configuration, since the posture of the seat body is changed and voice having a relaxing effect on the seated occupant can be output when the seated occupant is in an excited state, it is possible to calm the seated occupant down.

At this time, the functional member may be the sound output unit provided in the headrest, the wearable device may include a position detection unit which detects position information of the seated occupant, the acquisition unit may acquire the position information of the seated occupant from the position detection unit, and the control unit may include a drinking estimation unit which estimates a drinking level of the seated occupant based on heart rate information as the biometric information and the position information acquired by the acquisition unit, and control the sound output unit to output a voice related to the drinking level of the seated occupant when the drinking level of the seated occupant estimated by the drinking estimation unit is equal to or higher than a threshold value.

With the above-described configuration, when the seated occupant is in a drinking state, it is possible to appropriately prevent drunk driving.

At this time, the functional member may be the movable portion provided in the seat back or the seat cushion, the wearable device may include a posture detection unit which detects posture information of the seated occupant, the acquisition unit may acquire the posture information of the seated occupant from the posture detection unit, and the control unit may include a posture estimation unit which estimates a seated posture of the seated occupant based on the posture information acquired by the acquisition unit, and control the movable portion to rock or knead a body of the seated occupant when the seated posture of the seated occupant estimated by the posture estimation unit remains the same for a predetermined period of time.

With the above-described configuration, since the posture of the seat body is changed and the seated occupant is massaged by the movable portion when the posture of the seated occupant remains the same for a predetermined period of time and the seated occupant is at risk of traveler's thrombosis, it is possible to suppress traveler's thrombosis.

At this time, the functional member may be the movable portion provided in the seat back or the seat cushion, and the control unit may include a blood pressure estimation unit which estimates a blood pressure index of the seated occupant based on blood pressure as the biometric information acquired by the acquisition unit, and control the movable portion to rock or knead a body of the seated occupant when the blood pressure index of the seated occupant estimated by the blood pressure estimation unit is equal to or higher than a threshold value.

With the above-described configuration, since the posture of the seat body is changed and the seated occupant is massaged by the movable portion when the seated occupant has high blood pressure and is at risk of traveler's thrombosis, it is possible to suppress traveler's thrombosis.

At this time, the functional member may be the movable portion provided in the seat back or the seat cushion, and the control unit may include a fatigue estimation unit which estimates a fatigue level of the seated occupant based on a blood oxygen concentration as the biometric information acquired by the acquisition unit, and control the movable portion to rock or knead a body of the seated occupant when the fatigue level of the seated occupant estimated by the fatigue estimation unit is equal to or higher than a threshold value.

With the above-described configuration, since the posture of the seat body is changed and the seated occupant is massaged by the movable portion when the fatigue level of the seated occupant is high, it is possible to relieve the fatigue of the seated occupant.

At this time, the seat system may further include a second wearable device which is worn by a passenger riding in a vehicle equipped with the seat body and detects biometric information of the passenger, the functional member may include a display unit which is provided in the seat body or the vehicle and displays information to the seated occupant, and the control unit may include an emotion estimation unit which estimates the emotion of the passenger based on the biometric information of the passenger acquired by the acquisition unit, and control the display unit to display the emotion of the passenger estimated by the emotion estimation unit.

With the above-described configuration, it is possible to notify the seated occupant that the passenger is in an excited state.

### ADVANTAGEOUS EFFECTS OF INVENTION

According to the present invention, it is possible to improve the comfort and convenience of the seated occupant by controlling the conveyance seat according to the state of the seated occupant.

Further, according to the present invention, it is possible to calm the seated occupant down.

Further, according to the present invention, it is possible to relieve the symptoms of the seated occupant.

Further, according to the present invention, it is possible to automatically make an emergency notification to the vehicle.

Further, according to the present invention, it is possible to appropriately prevent drunk driving.

Further, according to the present invention, it is possible to suppress traveler's thrombosis.

Further, according to the present invention, it is possible to relieve the fatigue of the seated occupant.

Further, according to the present invention, it is possible to notify the seated occupant that the passenger is in an excited state.

### BRIEF DESCRIPTION OF DRAWINGS

[FIG. 1] FIG. 1 is a diagram showing a seat system of a first embodiment.
[FIG. 2] FIG. 2 is a control block diagram of the seat system.
[FIG. 3] FIG. 3 is a control flowchart.
[FIG. 4] FIG. 4 is a flowchart of a seat control process.
[FIG. 5] FIG. 5 is a flowchart of a seat drive unit control process.
[FIG. 6] FIG. 6 is a flowchart of a functional member control process.
[FIG. 7] FIG. 7 is a diagram showing a seat system of a second embodiment.
[FIG. 8A] FIG. 8A is a diagram showing a display attached to an upper surface of a console box.
[FIG. 8B] FIG. 8B is a diagram showing a display attached to a front end of the console box.
[FIG. 9] FIG. 9 is a diagram showing a state in which the display is detached from the console box.
[FIG. 10A] FIG. 10A is a diagram showing a seat system of a third embodiment in a state where a seat body is in a normal position.
[FIG. 10B] FIG. 10B is a diagram showing a state where the seat body is in a horizontal position.
[FIG. 11] FIG. 11 is a diagram showing a seat system of a fourth embodiment and showing a state where a display unit is attached in a warning ON mode.
[FIG. 12] FIG. 12 is a diagram showing a state where the display unit is attached in a warning OFF mode.
[FIG. 13] FIG. 13 is a diagram showing a state where the display unit is detached in a warning ON mode.
[FIG. 14] FIG. 14 is a diagram showing a seat system of a fifth embodiment and showing a seat back in a protruding state.
[FIG. 15A] FIG. 15A is a diagram showing a state where both end parts of a back center portion are in normal positions.
[FIG. 15B] FIG. 15B is a diagram showing a state where both end parts of the back center portion are in protruding positions.
[FIG. 16] FIG. 16 is a diagram showing a seat back of a first modified example in a protruding state.
[FIG. 17A] FIG. 17A is a diagram showing a state where a center part of a back center portion is in a normal position.
[FIG. 17B] FIG. 17B is a diagram showing a state where the center part of the back center portion is in a protruding position.
[FIG. 18A] FIG. 18A is a diagram showing a state where a center part of a back center portion of a second modified example is in a normal position.
[FIG. 18B] FIG. 18B is a diagram showing a state where the center part of the back center portion of the second modified example is in a protruding position.
[FIG. 19A] FIG. 19A is a diagram showing a seat system of a sixth embodiment and showing a state where an armrest is in a storage position.
[FIG. 19B] FIG. 19B is a diagram showing a state where the armrest is in a first use position.
[FIG. 19C] FIG. 19C is a diagram showing a state where the armrest is in a second use position.
[FIG. 20A] FIG. 20A is a diagram showing a seat system of a seventh embodiment and showing a state where an armrest is in a use position.
[FIG. 20B] FIG. 20B is a diagram showing a state where the armrest is in a first storage position.
[FIG. 20C] FIG. 20C is a diagram showing a state where the armrest is in a second storage position.
[FIG. 21A] FIG. 21A is a diagram showing a state where a left armrest is in a higher position than a right armrest.
[FIG. 21B] FIG. 21B is a diagram showing a state where the right armrest is in a higher position than the left armrest.

### DESCRIPTION OF EMBODIMENTS

### <First embodiment>

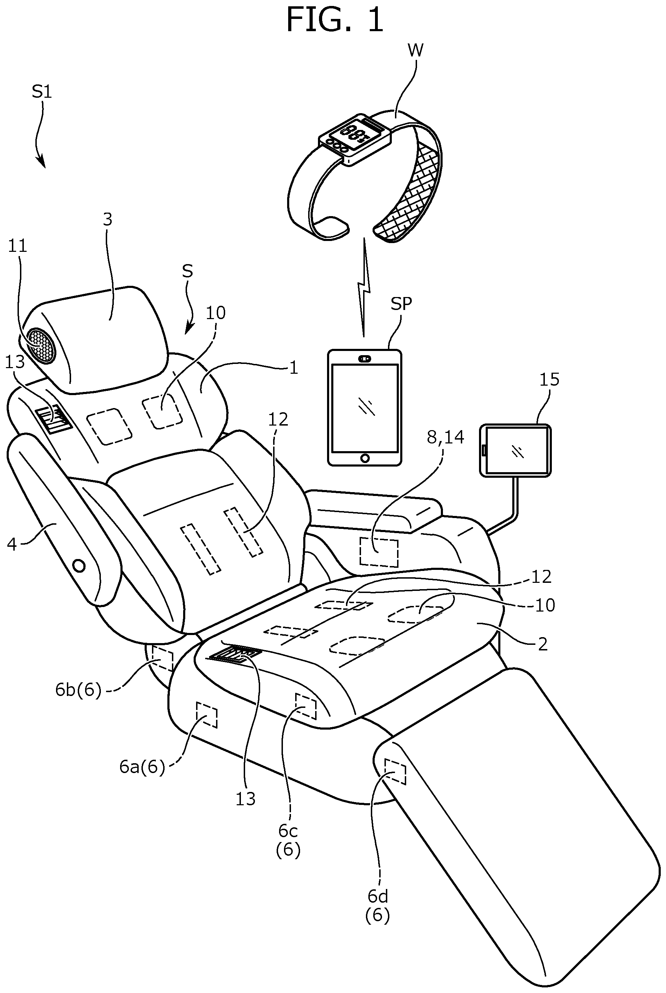

Hereinafter, a first embodiment of the present invention will be described with reference to FIGS. 1 to 6.

In the following description, the "front to rear direction" refers to the front to rear direction of the conveyance seat, and is the direction that coincides with the travel direction when the vehicle is traveling. Further, the "seat width direction" refers to the width direction of the conveyance seat, and is the direction that coincides with the right and left direction as viewed from an occupant seated on the conveyance seat. Further, the "up and down direction" refers to the up and down direction of the conveyance seat, and is the direction that coincides with the vertical direction when the vehicle is traveling on a horizontal plane.

### <<Seat system>>

As shown in FIG. 1, a seat system S1 of this embodiment mainly includes a conveyance seat S which has a seat body, a wearable device W which is worn by a seated occupant (for example, a vehicle driver) and acquires biometric information of the seated occupant, and a mobile terminal SP which is operated by the seated occupant. Furthermore, the wearable device W may be worn by a passenger riding in a vehicle in which a seat body is provided.

In the seat system S1, data is transmitted and received wirelessly between the conveyance seat S, the wearable device W, and the mobile terminal SP.

The mobile terminal SP is, for example, a smartphone operated by the seated occupant. The mobile terminal SP analyzes motion data by receiving the biometric information detected by the wearable device W from the wearable device W. The mobile terminal SP transmits the analyzed motion data to the conveyance seat S.

Furthermore, the motion data may be analyzed by a control unit 8 of the conveyance seat S, which will be described later.

### <<Conveyance seat>>

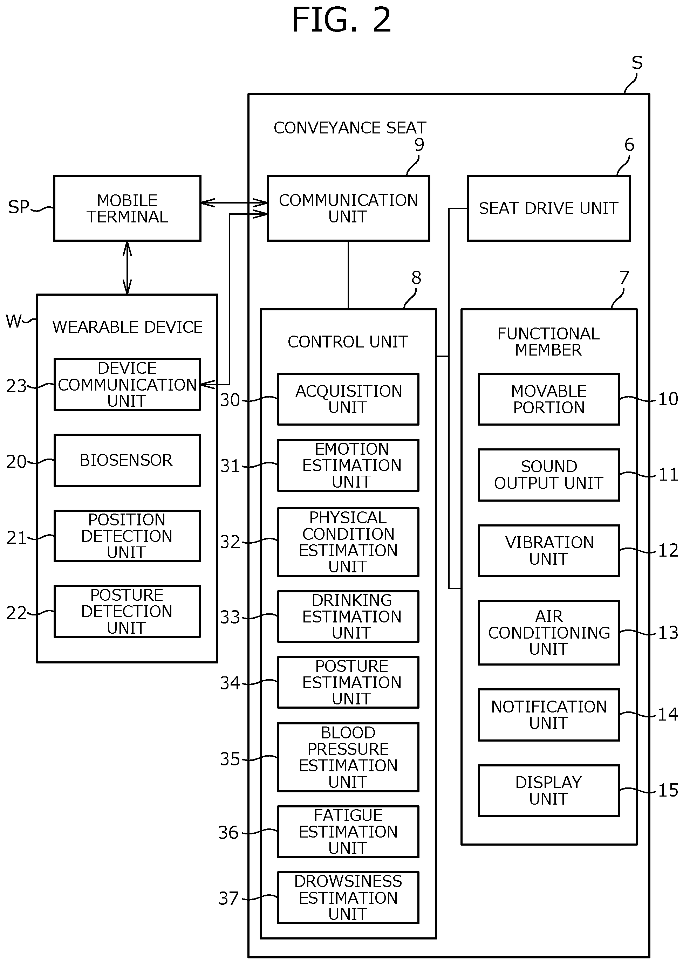

As shown in FIGS. 1 and 2, the conveyance seat S includes a seat body having a seat back 1, a seat cushion 2, a headrest 3, an armrest 4, and an ottoman 5, a seat drive unit 6 which changes the posture of the seat back 1 and the seat cushion 2, a functional member 7 that is provided in the seat body, a control unit 8 which controls the seat drive unit 6 and the functional member 7, and a communication unit 9 which communicates with the wearable device W and the mobile terminal SP.

As shown in FIG. 1, the conveyance seat S mainly includes the seat back 1 which serves as a backrest supporting the back of the seated occupant, the seat cushion 2 which serves as a seating portion supporting the buttocks of the seated occupant, the headrest 3 which supports the head of the seated occupant, the armrest 4 on which the seated occupant rests his/her elbows, and the ottoman 5 which supports the legs of the seated occupant. The seat body of the conveyance seat S is constituted by the seat back 1, the seat cushion 2, the headrest 3, the armrest 4, and the ottoman 5.

As shown in FIG. 1, the seat drive unit 6 includes a height link drive unit 6a which raises and lowers the seat body relative to the vehicle floor, a reclining drive unit 6b which rotates the seat back 1 relative to the seat cushion 2, a tilt drive unit 6c which moves the front part of the seat cushion 2 in the up and down direction, and a foot drive unit 6d which rotates the ottoman 5 relative to the seat cushion 2.

The seat drive unit 6 changes each posture of the seat back 1, the seat cushion 2, the headrest 3, the armrest 4, and the ottoman 5.

In detail, the seat body can change the seated posture of the seated occupant by changing each position of the seat back 1, the seat cushion 2, the headrest 3, the armrest 4, and the ottoman 5 using the height link drive unit 6a, the reclining drive unit 6b, the tilt drive unit 6c, and the foot drive unit 6d.

The functional member 7 is a device that functions to adjust the seat body and the environment surrounding the seat body and improve the comfort and convenience of the occupant seated on the seat body. As shown in FIGS. 1 and 2, the functional member 7 includes a movable portion 10 which moves a part of the seat body between a normal position and a protruding position that protrudes further toward the seated occupant than the normal position, a sound output unit 11 which outputs sound, a vibration unit 12 which applies a vibration to the seated occupant, an air conditioning unit 13 which blows air toward the seated occupant, a notification unit 14 which makes an emergency notification to the outside of the vehicle, and a display unit 15 which displays information to the seated occupant.

Each of the movable portion 10, the sound output unit 11, the vibration unit 12, the air conditioning unit 13, the notification unit 14, and the display unit 15 of the functional member 7 is provided in the seat body. Furthermore, the functional member 7 may be provided at a location other than the seat body within the vehicle in which the seat body is disposed.

The movable portion 10 is a device which is provided inside the seat back 1 and the seat cushion 2 and kneads the seated occupant. The movable portion 10 is, for example, an air cell that operates to protrude each side portion of the seat back 1 and the seat cushion 2. The movable portion 10 is controlled by the control unit 8, and when compressed air is enclosed in the movable portion 10, the movable portion 10 expands toward the seated occupant and protrudes from the normal position to the protruding position. Then, the movable portion 10 contracts as the enclosed compressed air is discharged, and returns to the normal position. When the occupant is seated on the seat cushion 2, the seated occupant operates a switch (not shown) or the control unit 8 detects biometric information to cause compressed air to be enclosed in the air cell and adjusts the movable range of the air cell.

Furthermore, the movable portion 10 may be configured to operate by a mechanical mechanism (such as a link mechanism or a hinge mechanism). Further, the movable portion 10 may be configured to supply air to the air cell by a motor type or hydraulic type drive device or the like.

The sound output unit 11 is a speaker device provided in the headrest 3 and outputs voice to the seated occupant. The sound output unit 11 is controlled by the control unit 8 and can output voice to calm the seated occupant down or to inform the seated occupant of information.

Although the sound output unit 11 is provided in the headrest 3, the present invention is not limited thereto and the sound output unit 11 may be provided in the seat back 1, the seat cushion 2, the armrest 4, or the like.

The vibration unit 12 is a device which is provided inside the seat back 1 and the seat cushion 2 and applies vibration to the seated occupant. The vibration unit 12 is controlled by the control unit 8 and can provide a stimulus to the seated occupant or notify the seated occupant of information.

Although the vibration unit 12 is provided inside the seat back 1 and the seat cushion 2, the present invention is not limited thereto and the vibration unit 12 may be provided in the headrest 3, the armrest 4, the ottoman 5, and the like.

The air conditioning unit 13 is a device which is provided in the seat back 1 and the seat cushion 2 and blows air toward the seated occupant. More specifically, the air conditioning unit 13 is controlled by the control unit 8, and supplies temperature-adjusted cool air or warm air to the seated occupant from air outlets provided on the surfaces of the seat back 1 and the seat cushion 2.

The air conditioning unit 13 can, for example, blow cool air around the neck of the seated occupant whose body temperature is rising to prevent heatstroke, or blow warm air around the legs of the seated occupant who is feeling chilly to relieve poor physical condition.

Further, the air conditioning unit 13 is controlled by the control unit 8 and supplies air containing aromatic components from air outlets toward the seated occupants. The air conditioning unit 13 can relax the seated occupant by emitting, for example, the fragrance of flowers, fruits, etc., toward the seated occupant.

The notification unit 14 is an emergency notification device for a vehicle that is provided in the seat cushion 2 and communicates between the vehicle and an emergency notification center to notify the driver of an emergency such as an accident or illness and the situation of the emergency. The notification unit 14 is controlled by the control unit 8 and can notify the state of the seated occupant to the emergency notification center outside the vehicle. For example, when the seated occupant is determined to be unconscious based on their pulse rate and blood pressure, it is possible to communicate with the emergency notification center and automatically make an emergency notification to the vehicle.

The display unit 15 is a display device which is provided in the seat body or the vehicle and displays information to the seated occupant. The display unit 15 is, for example, a tablet terminal or a display attached to the seat body or the vehicle. The display unit 15 is controlled by the control unit 8 and displays biometric information or information on emotion and fatigue level of the seated occupant or passenger.

Furthermore, the seat body may be provided with functional members 7 other than the above-described devices. For example, the functional member 7 may have a lighting device provided on the seat body. Also, the functional member 7 may be configured to adjust the seat body and the environment surrounding the seat body in other ways.

The control unit 8 incorporates a control circuit for controlling the seat drive unit 6 and the functional member 7. The control unit 8 is connected to the height link drive unit 6a, the reclining drive unit 6b, the tilt drive unit 6c, and the foot drive unit 6d of the seat drive unit 6 and the movable portion 10, the sound output unit 11, the vibration unit 12, the air conditioning unit 13, the notification unit 14, and the display unit 15 of the functional member 7. Each component is connected to each other via a bus to be able to communicate with each other.

Furthermore, in addition to these, the conveyance seat S may be equipped with various actuators, input devices, output devices, and various sensors.

The communication unit 9 wirelessly transmits and receives data between the conveyance seat S, the wearable device W, and the mobile terminal SP via the in-vehicle network. Specifically, the communication unit 9 receives the biometric information, posture information, and position information from the wearable device W.

### <<Wearable device>>

The wearable device W has a function as a pulse oximeter, and can read biometric information such as heart rate by reading and analyzing the fluctuation of the hemoglobin oxygen concentration in the blood from the rate of change in absorbance, for example, from the wrist of the occupant wearing the device. As shown in FIG. 1, the wearable device W has a wristwatch shape. Furthermore, the wearable device W is not limited to a wristwatch shape, but may be, for example, a wristband shape, a finger ring shape, a pair of glasses shape, a clip shape, or the like.

As shown in FIG. 2 the wearable device W includes a biosensor 20 which detects the biometric information of the seated occupant, a position detection unit 21 which detects position information of the seated occupant, a posture detection unit 22 which detects posture information of the seated occupant, and a device communication unit 23 which communicates with the conveyance seat S and the mobile terminal SP.

Like the wearable device W worn by the seated occupant, the wearable device W (second wearable device) worn by the passenger detects the passenger's biometric information using the biosensor 20 and communicates with the conveyance seat S and the mobile terminal SP via the device communication unit 23. Further, the wearable device W worn by the passenger is configured to detect posture information and position information of the passenger by the position detection unit 21 and the posture detection unit 22.

The biosensor 20 detects the biometric information of the seated occupant or passenger and transmits the biometric information to the conveyance seat S via the device communication unit 23. Examples of the biometric information acquired by the biosensor 20 include heart rate, pulse rate, body temperature, sweat rate, blood pressure, moisture content, blood oxygen concentration, respiratory rhythm, and respiratory depth.

For example, when the heart rate detected by the biosensor 20 is higher than normal, it can be estimated that the seated occupant or passenger is in an excited state. Further, when the body temperature, pulse rate, and sweat rate are higher than normal and the blood pressure is lower than normal, it can be estimated that the seated occupant or passenger is at risk of heatstroke. Further, when the body temperature is much higher than normal and the blood pressure is much lower than normal, it can be estimated that the seated occupant or passenger is at risk of severe heatstroke (loss of consciousness, etc.). Further, when the pulse rate is higher than normal and the respiratory depth is shallower than normal, it can be estimated that the seated occupant or passenger may have been drinking. Further, when the blood pressure is higher than normal and the moisture content is lower than normal, it can be estimated that there is a risk of traveler's thrombosis. Further, when the blood oxygen concentration is lower than normal, it can be estimated that the fatigue level is high. Further, when the heart rate is lower than normal and the respiratory depth is deeper than normal, it can be estimated that the seated occupant or passenger is drowsy.

The position detection unit 21 detects the position information of the seated occupant and transmits the position information to the conveyance seat S via the device communication unit 23. The position detection unit 21 is, for example, a GPS sensor, and is capable of detecting the position information of the seated occupant.

For example, when the position information detected by the position detection unit 21 indicates that the occupant has been staying in an establishment that serves alcohol for a long period of time, it can be estimated that the occupant may have been drinking.

The posture detection unit 22 detects posture information of the seated occupant and transmits the posture information to the conveyance seat S via the device communication unit 23. The posture detection unit 22 is, for example, an acceleration sensor or an angular velocity sensor (gyro sensor), and can detect the seated posture of the seated occupant.

For example, when the seated posture detected by the posture detection unit 22 remains the same for a predetermined period of time, it can be estimated that there is a risk of traveler's thrombosis.

The device communication unit 23 executes data transmission and reception between the conveyance seat S, the wearable device W, and the mobile terminal SP via the in-vehicle network. Specifically, the device communication unit 23 transmits biometric information, posture information, and position information to the conveyance seat S.

### <<Hardware configuration of conveyance seat>>

As shown in FIG. 2, the conveyance seat S includes the control unit 8 for controlling the seat drive unit 6 and the functional member 7. The control unit 8 has a control circuit and is mainly composed of a CPU (Central Processing Unit), which is a central processing unit, a ROM (Read Only Memory), a RAM (Random Access Memory), a HDD (Hard Disk Drive), etc. as storage devices.

The CPU is a central processing unit that executes various programs and controls each unit. That is, the CPU reads out a program from the ROM or HDD and executes the program using the RAM as a working area. The CPU controls each component and executes various types of arithmetic processing in accordance with the program stored in the ROM or HDD.

The ROM stores various programs and various data, while the RAM serves as a working area for temporarily storing programs or data.

The HDD may be a Solid State Drive (SSD) and stores various programs including the operating system and various data.

### <<Function of control unit>>

Next, the function of the control unit 8 will be described with reference to FIGS. 2 to 6. The functional units of the control unit 8 are realized by the cooperation of hardware devices (specifically, an MPU and a memory) constituting the ECU with software devices (control circuits).

As shown in FIG. 2, the control unit 8 includes an acquisition unit 30 which acquires the biometric information acquired from the wearable device W, an emotion estimation unit 31 which estimates the emotion of the seated occupant and passenger, a physical condition estimation unit 32 which estimates the condition of the seated occupant and passenger, a drinking estimation unit 33 which estimates the drinking level of the seated occupant and passenger, a posture estimation unit 34 which estimates the seated posture of the seated occupant and passenger, a blood pressure estimation unit 35 which estimates the blood pressure index of the seated occupant and passenger, a fatigue estimation unit 36 which estimates the fatigue level of the seated occupant and passenger, and a drowsiness estimation unit 37 which estimates the drowsiness level of the seated occupant and passenger.

### (Acquisition unit 30)

The acquisition unit 30 acquires the biometric information of the seated occupant and passenger, the posture information of the seated occupant, and the position information of the seated occupant acquired from the wearable device W via the communication unit 9. In the control unit 8, the emotion estimation unit 31, the physical condition estimation unit 32, the drinking estimation unit 33, the posture estimation unit 34, the blood pressure estimation unit 35, the fatigue estimation unit 36, and the drowsiness estimation unit 37 estimate the states of the seated occupant and passenger from the biometric information of the seated occupant and passenger, the posture information of the seated occupant, and the position information of the seated occupant acquired by the acquisition unit 30. Then, the control unit 8 controls the seat drive unit 6 and the functional member 7 based on the states of the seated occupant and passenger estimated by the estimation units.

Furthermore, the acquisition unit 30 may be configured to acquire identification information of the seated occupant and passenger. Here, the identification information is information for identifying the seated occupant (personal authentication), and corresponds to, for example, ID information of the seated occupant and passenger, image information showing a face image or a fingerprint image, voiceprint information, and the like.

The identification information may be acquired by communicating with the mobile terminal SP carried by the seated occupant and passenger. In this case, when the occupant carrying the mobile terminal SP is seated on the conveyance seat S, the communication unit 9 may automatically acquire identification information of the seated occupant and passenger by communicating with the mobile terminal SP of the seated occupant and passenger. Further, the seated occupant and passenger may input the identification information from the mobile terminal SP and receive data related to the content of the input operation to acquire the identification information. Alternatively, the identification information may be obtained by recording the voices of the seated occupant and passenger using a microphone installed in the vehicle.

### (Emotion estimation unit 31)

The emotion estimation unit 31 estimates the emotion of the seated occupant and passenger based on the biometric information acquired by the acquisition unit 30.

In detail, the emotion estimation unit 31 estimates the emotion (excited state, relaxed state, etc.) of the seated occupant and passenger based on the biometric information acquired by the acquisition unit 30. The emotion estimation unit 31 estimates the emotion of the seated occupant and passenger by calculating an emotion index based on, for example, biometric information such as heart rate and respiratory rhythm using a learning model constructed by machine learning.

Furthermore, parameters for calculating an emotion index are not limited to heart rate and respiratory rhythm. For example, when the biosensor 20 detects electroencephalogram data of the seated occupant, the emotion estimation unit 31 may estimate that the seated occupant is in an irritated mood or an enjoyable mood from the electroencephalogram data.

Further, the emotion of the seated occupant and passenger may be estimated based on the posture information acquired by the acquisition unit 30. For example, when the seated occupant is in a relaxed seated posture, the emotion index may be estimated to be low (the relaxation degree may be estimated to be high).

When the emotion index of the seated occupant estimated by the emotion estimation unit 31 is equal to or higher than the threshold value, the control unit 8 controls the seat drive unit 6 to change the posture of the seat back 1 and the seat cushion 2.

Specifically, when it is determined that the emotion index calculated by the emotion estimation unit 31 is equal to or higher than a predetermined threshold value (for example, a high level of irritability and excitement), for example, the control unit 8 raises the seat cushion 2 by the height link drive unit 6a, tilts the seat back 1 backward by the reclining drive unit 6b, raises the front part of the seat cushion 2 by the tilt drive unit 6c, and rotates the ottoman 5 upward by the foot drive unit 6d. In this way, the control unit 8 controls the seat drive unit 6 to change the posture of the seat body. In other words, the seated occupant can take a relaxed seated posture (for example, a sleeping posture) by making the seat body flat.

Furthermore, the posture of the seat body changed by the seat drive unit 6 is not limited thereto, and the posture of the seat body may be changed according to the emotion of the seated occupant.

The control unit 8 controls the functional member 7 when the emotion index of the seated occupant estimated by the emotion estimation unit 31 is equal to or higher than the threshold value. Specifically, the control unit 8 controls the air conditioning unit 13 to emit a fragrance toward the seated occupant when the emotion index of the seated occupant estimated by the emotion estimation unit 31 is equal to or higher than the threshold value. Further, the control unit 8 controls the sound output unit 11 to output a voice related to the emotion index of the seated occupant when the emotion index of the seated occupant estimated by the emotion estimation unit 31 is equal to or higher than the threshold value. Furthermore, the control unit 8 controls the display unit 15 to display the emotion of the passenger estimated by the emotion estimation unit 31.

When it is determined that the emotion index calculated by the emotion estimation unit 31 is equal to or higher than a predetermined threshold value, the control unit 8 emits a relaxing fragrance toward the seated occupant by the air conditioning unit 13.

Specifically, the air conditioning unit 13 emits a forest fragrance toward the face of the seated occupant to relax the seated occupant. Furthermore, the control unit 8 may control the air conditioning unit 13 to blow cool air to the seated occupant to calm him or her down from excitement.

Further, when it is determined that the emotion index is equal to or higher than a predetermined threshold value, the control unit 8 notifies the seated occupant that the seated occupant is currently in an excited state by the sound output unit 11. Specifically, the sound output unit 11 outputs a voice saying, "You are in an irritated and excited state, so please stay calm while driving." Further, the sound output unit 11 outputs relaxing music or music that enhances concentration while driving. Furthermore, when it is estimated that the excited state is caused by poor posture, the sound output unit 11 outputs a voice saying, "Your posture is poor, so please correct your posture."

Furthermore, when it is determined that the emotion index is equal to or higher than a predetermined threshold value, the control unit 8 notifies the seated occupant that the seated occupant or passenger is currently in an irritated state by the display unit 15. Specifically, the display unit 15 displays a message saying, "Please drive slowly as your passenger is currently in an irritated state." Further, the display unit 15 also displays an irritated face image and a smiling face image.

Furthermore, the functional member 7 that is controlled by the control unit 8 based on the emotion index of the seated occupant estimated by the emotion estimation unit 31 is not limited to the sound output unit 11, the air conditioning unit 13, and the display unit 15. For example, the control unit 8 may control the movable portion 10 or the vibration unit 12 to massage and relax the seated occupant when the emotion index of the seated occupant estimated by the emotion estimation unit 31 is equal to or higher than the threshold value. For example, when it is estimated that the excited state is caused by poor posture, the movable portion 10 may be controlled to correct the posture of the seated occupant.

Further, the control unit 8 may measure a safe driving index (whether the driver is driving safely) based on the emotion of the seated occupant estimated by the emotion estimation unit 31. At this time, when there is a passenger, the safe driving index may be calculated taking into account the passenger's emotion estimated by the emotion estimation unit 31. For example, when the passenger becomes irritated due to sudden braking, the safe driving index may be subtracted according to the passenger's feelings of irritation, and the sound output unit 11 or the display unit 15 may notify the passenger of the possibility of dangerous driving.

### (Physical condition estimation unit 32)

The physical condition estimation unit 32 estimates the physical condition of the seated occupant and passenger based on the biometric information acquired by the acquisition unit 30.

In detail, the physical condition estimation unit 32 estimates the physical condition (heat stroke, feeling chills, unconsciousness, etc.) of the seated occupant and passenger based on the biometric information acquired by the acquisition unit 30. The physical condition estimation unit 32 estimates the physical condition of the seated occupant and passenger by calculating a physical condition index based on biometric information such as heart rate, body temperature, blood pressure, etc. using a learning model constructed by machine learning.

Furthermore, parameters for calculating physical condition index are not limited to heart rate, body temperature, and blood pressure. Further, the physical condition of the seated occupant and passenger may be estimated based on the posture information acquired by the acquisition unit 30. For example, when the seated occupant is not moving, it may be estimated that the seated occupant has poor physical condition.

The control unit 8 controls the seat drive unit 6 to change the posture of the seat back 1 and the seat cushion 2 when the physical condition index of the seated occupant estimated by the physical condition estimation unit 32 is equal to or higher than a first threshold value.

Specifically, when it is determined that the physical condition index calculated by the physical condition estimation unit 32 is equal to or higher than a predetermined first threshold value (for example, there is a risk of heatstroke), for example, the control unit 8 raises the seat cushion 2 by the height link drive unit 6a, tilts the seat back 1 backward by the reclining drive unit 6b, raises the front part of the seat cushion 2 by the tilt drive unit 6c, and rotates the ottoman 5 upward by the foot drive unit 6d. In this way, the control unit 8 controls the seat drive unit 6 to change the posture of the seat body so that the seated occupant takes a relaxed seated posture (for example, a sleeping posture).

Furthermore, the posture of the seat body changed by the seat drive unit 6 is not limited thereto, and the posture of the seat body may be changed according to the physical condition of the seated occupant.

The control unit 8 controls the functional member 7 when the physical condition index of the seated occupant estimated by the physical condition estimation unit 32 is equal to or higher than the first threshold value. Specifically, the control unit 8 controls the air conditioning unit 13 to blow cool air or warm air toward the seated occupant when the physical condition index of the seated occupant estimated by the physical condition estimation unit 32 is equal to or higher than the first threshold value. Further, the control unit 8 controls the notification unit 14 to make an emergency notification to the outside of the vehicle when the physical condition index of the seated occupant estimated by the physical condition estimation unit 32 is equal to or higher than a second threshold value higher than the first threshold value.

When it is determined that the physical condition index calculated by the physical condition estimation unit 32 is equal to or higher than the predetermined first threshold value (for example, there is a risk of heatstroke), the control unit 8 blows cool air toward the neck of the seated occupant by the air conditioning unit 13.

Further, when it is determined that the physical condition index calculated by the physical condition estimation unit 32 is equal to or higher than the predetermined second threshold value (for example, an unconscious state due to severe heatstroke), the control unit 8 automatically communicates with the emergency notification center (such as notification that the seated occupant is unconscious) by the notification unit 14.

Furthermore, the functional member 7 controlled by the control unit 8 based on the physical condition index of the seated occupant estimated by the physical condition estimation unit 32 is not limited to the air conditioning unit 13 and the notification unit 14. For example, the control unit 8 may control the movable portion 10 or the vibration unit 12 to massage and relax the seated occupant or may control the sound output unit 11 or the display unit 15 to notify the seated occupant that the passenger has poor physical condition when the physical condition index of the seated occupant estimated by the physical condition estimation unit 32 is equal to or higher than the threshold value.

### (Drinking estimation unit 33)

The drinking estimation unit 33 estimates the drinking level of the seated occupant based on the position information and biometric information acquired by the acquisition unit 30.

In detail, the drinking estimation unit 33 estimates the drinking level of the seated occupant (whether the seated occupant is in a drinking state, etc.) based on the position information and biometric information acquired by the acquisition unit 30. The drinking estimation unit 33 estimates the drinking level of the seated occupant by calculating the drinking level based on, for example, position information (staying in an establishment that serves alcohol for a long period of time) and biometric information such as heart rate information (heart rate, pulse rate) and respiratory rhythm using a learning model constructed by machine learning.

Furthermore, parameters for calculating the drinking level are not limited to position information, heart rate information, and respiratory rhythm. Further, the drinking level of the seated occupant and passenger may be estimated based on the posture information acquired by the acquisition unit 30. For example, when the movements of the seated occupant are restless compared to normal times, it may be estimated that the occupant is in a drinking state.

The control unit 8 changes the posture of the seat back 1 and the seat cushion 2 by controlling the seat drive unit 6 when the drinking level of the seated occupant estimated by the drinking estimation unit 33 is equal to or higher than the threshold value.

Specifically, when it is determined that the drinking level calculated by the drinking estimation unit 33 is equal to or higher than a predetermined threshold value (for example, a drinking state), for example, the control unit 8 raises the seat cushion 2 by the height link drive unit 6a, tilts the seat back 1 backward by the reclining drive unit 6b, raises the front part of the seat cushion 2 by the tilt drive unit 6c, and rotates the ottoman 5 upward by the foot drive unit 6d. In this way, the control unit 8 controls the seat drive unit 6 to change the posture of the seat body so that the seated occupant takes a non-driving seated posture (for example, a sleeping posture).

The control unit 8 controls the functional member 7 when the drinking level of the seated occupant estimated by the drinking estimation unit 33 is equal to or higher than the threshold value. Specifically, the control unit 8 controls the sound output unit 11 to output a voice related to the drinking level of the seated occupant.

When it is determined that the physical condition index calculated by the drinking estimation unit 33 is equal to or higher than a predetermined threshold value (for example, a drinking state), the control unit 8 outputs a message saying, "Do not drive in a drinking state" by the sound output unit 11.

Furthermore, the functional member 7 controlled by the control unit 8 based on the drinking level of the seated occupant estimated by the drinking estimation unit 33 is not limited to the sound output unit 11.

Further, the control unit 8 may determine the drinking level of the passenger by the drinking estimation unit 33, and control the seat drive unit 6 or the functional member 7 when the passenger is in a drinking state.

### (Posture estimation unit 34)

The posture estimation unit 34 estimates the seated posture of the seated occupant based on the posture information acquired by the acquisition unit 30.

In detail, the posture estimation unit 34 estimates the seated posture based on the posture information acquired by the acquisition unit 30. The posture estimation unit 34 estimates that the seated posture of the seated occupant remains the same for a predetermined period of time based on, for example, posture information using a learning model constructed by machine learning.

The control unit 8 changes the posture of the seat back 1 and the seat cushion 2 by controlling the seat drive unit 6 when the posture estimation unit 34 estimates that the seated posture of the seated occupant remains the same for a predetermined period of time.

Specifically, the control unit 8 moves the seat back 1, the seat cushion 2, and the ottoman 5 by driving, for example, the height link drive unit 6a, the reclining drive unit 6b, the tilt drive unit 6c, and the foot drive unit 6d when the posture estimation unit 34 determines that the seated posture remains the same for a predetermined period of time. In this way, since the control unit 8 controls the seat drive unit 6 to change the posture of the seat body, it is possible to improve blood flow and prevent traveler's thrombosis by the movement of the seated occupant.

The control unit 8 controls the functional member 7 when the posture estimation unit 34 estimates that the seated posture of the seated occupant remains the same for a predetermined period of time. Specifically, the control unit 8 controls the movable portion 10 to rock or knead the body of the seated occupant.

The control unit 8 massages the seated occupant by expanding and contracting the air cells of the movable portion 10 when the posture estimation unit 34 determines that the seated posture remains the same for a predetermined period of time.

Furthermore, the functional member 7 controlled by the control unit 8 based on the seated posture of the seated occupant estimated by the posture estimation unit 34 is not limited to the movable portion 10.

### (Blood pressure estimation unit 35)

The blood pressure estimation unit 35 estimates the seated posture of the seated occupant based on the biometric information acquired by the acquisition unit 30.

In detail, the blood pressure estimation unit 35 estimates the seated posture based on the biometric information (blood pressure or moisture content) acquired by the acquisition unit 30. The blood pressure estimation unit 35 estimates the blood pressure index of the seated occupant based on, for example, blood pressure or moisture content using a learning model constructed by machine learning.

The control unit 8 changes the posture of the seat back 1 and the seat cushion 2 by controlling the seat drive unit 6 when the blood pressure index of the seated occupant estimated by the blood pressure estimation unit 35 is equal to or higher than the threshold value (when the blood pressure is high and the moisture content is not sufficient) .

Specifically, when it is determined that the blood pressure index calculated by the blood pressure estimation unit 35 is equal to or higher than a predetermined threshold value, for example, the control unit 8 moves the seat back 1, the seat cushion 2, and the ottoman 5 by driving the height link drive unit 6a, the reclining drive unit 6b, the tilt drive unit 6c, and the foot drive unit 6d. In this way, since the control unit 8 controls the seat drive unit 6 to change the posture of the seat body, it is possible to improve blood flow and prevent traveler's thrombosis by the movement of the seated occupant.

The control unit 8 controls the functional member 7 when it is estimated that the blood pressure index calculated by the blood pressure estimation unit 35 is equal to or higher than a predetermined threshold value. Specifically, the control unit 8 controls the movable portion 10 to rock or knead the body of the seated occupant.

The control unit 8 massages the seated occupant by expanding and contracting the air cells of the movable portion 10 when it is determined that the blood pressure index calculated by the blood pressure estimation unit 35 is equal to or higher than a predetermined threshold value (for example, when the blood pressure is high and the moisture content is not sufficient).

Furthermore, the functional member 7 controlled by the control unit 8 based on the seated posture of the seated occupant estimated by the blood pressure estimation unit 35 is not limited to the movable portion 10.

### (Fatigue estimation unit 36)

The fatigue estimation unit 36 estimates the fatigue level of the seated occupant based on the biometric information acquired by the acquisition unit 30.

In detail, the fatigue estimation unit 36 estimates the fatigue level based on the biometric information (blood oxygen concentration) acquired by the acquisition unit 30. The fatigue estimation unit 36 estimates the fatigue level of the seated occupant based on, for example, blood oxygen concentration using a learning model constructed by machine learning.

The control unit 8 changes the posture of the seat back 1 and the seat cushion 2 by controlling the seat drive unit 6 when the fatigue level of the seated occupant estimated by the fatigue estimation unit 36 is equal to or higher than the threshold value (in a fatigued state with low blood oxygen concentration).

Specifically, when it is determined that the fatigue level calculated by the fatigue estimation unit 36 is equal to or higher than a predetermined threshold value, for example, the control unit 8 raises the seat cushion 2 by the height link drive unit 6a, tilts the seat back 1 backward by the reclining drive unit 6b, raises the front part of the seat cushion 2 by the tilt drive unit 6c, and rotates the ottoman 5 upward by the foot drive unit 6d. In this way, the control unit 8 controls the seat drive unit 6 to change the posture of the seat body so that the seated occupant takes a relaxed seated posture (for example, a sleeping posture) .

The control unit 8 controls the functional member 7 when it is estimated that the fatigue level calculated by the fatigue estimation unit 36 is equal to or higher than a predetermined threshold value. Specifically, the control unit 8 controls the movable portion 10 to rock or knead the body of the seated occupant.

The control unit 8 massages the seated occupant by expanding and contracting the air cells of the movable portion 10 when it is determined that the fatigue level calculated by the fatigue estimation unit 36 is equal to or higher than a predetermined threshold value.

Furthermore, the functional member 7 controlled by the control unit 8 based on the fatigue level estimated by the fatigue estimation unit 36 is not limited to the movable portion 10.

### (Drowsiness estimation unit 37)

The drowsiness estimation unit 37 estimates the drowsiness level of the seated occupant based on the biometric information acquired by the acquisition unit 30.

In detail, the drowsiness estimation unit 37 estimates the drowsiness level based on the biometric information (heart rate, respiratory depth, blood pressure) acquired by the acquisition unit 30 and the time since waking up. The drowsiness estimation unit 37 estimates the drowsiness level of the seated occupant based on, for example, heart rate, respiratory depth, blood pressure, and the time since waking up using a learning model constructed by machine learning.

The control unit 8 changes the posture of the seat back 1 and the seat cushion 2 by controlling the seat drive unit 6 when the drowsiness level of the seated occupant estimated by the drowsiness estimation unit 37 is equal to or higher than the threshold value (awake state, sleeping state).

Specifically, when it is determined that the drowsiness level calculated by the drowsiness estimation unit 37 is equal to or higher than a predetermined threshold value, for example, the control unit 8 moves the seat back 1, the seat cushion 2, and the ottoman 5 by driving the height link drive unit 6a, the reclining drive unit 6b, the tilt drive unit 6c, and the foot drive unit 6d. In this way, the control unit 8 can encourage the seated occupant to wake up by the movement of the body of the seated occupant by controlling the seat drive unit 6 to change the posture of the seat body.

The control unit 8 controls the functional member 7 when it is estimated that the drowsiness level calculated by the drowsiness estimation unit 37 is equal to or higher than a predetermined threshold value. Specifically, the control unit 8 controls the air conditioning unit 13 to blow cool air toward the seated occupant.

The control unit 8 blows cool air toward the neck of the seated occupant by the air conditioning unit 13 when it is determined that the drowsiness level calculated by the drowsiness estimation unit 37 is equal to or higher than a predetermined threshold value (for example, awake state).

Furthermore, the functional member 7 controlled by the control unit 8 based on the drowsiness level estimated by the drowsiness estimation unit 37 is not limited to the air conditioning unit 13. For example, the vibration unit 12 may stimulate the seated occupant to wake him or her up. Further, the control unit 8 may control the sound output unit 11 or the display unit 15 to notify the seated occupant that he or she is in an awake state.

In this way, the emotion estimation unit 31, the physical condition estimation unit 32, the drinking estimation unit 33, the posture estimation unit 34, the blood pressure estimation unit 35, the fatigue estimation unit 36, and the drowsiness estimation unit 37 can determine the state of the seated occupant and passenger.

Furthermore, the state of the seated occupant and passenger may be determined in a composite manner based on the information estimated by each estimation unit.

### <<Control of conveyance seat>>

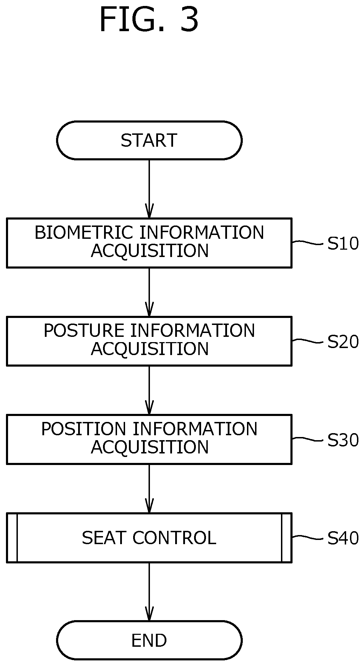

Next, the flow of the control process of the conveyance seat S executed by the control unit 8 will be described. The control process of the conveyance seat S is executed to drive the conveyance seat S when the seated occupant is seated on the seat body as shown in FIG. 3. Specifically, the control unit 8 executes a biometric information acquisition process (step S10) to acquire biometric information from the wearable device W, a posture information acquisition process (step S20) to acquire posture information from the wearable device W, a position information acquisition process (step S30) to acquire position information from the wearable device W, and a seat control process (step S40) to drive the conveyance seat **S.**

In the biometric information acquisition process (step S10), the acquisition unit 30 acquires the biometric information of the seated occupant and passenger detected by the biosensor 20 of the wearable device W.

In the posture information acquisition process (step S20), the acquisition unit 30 acquires the posture information of the seated occupant and passenger detected by the position detection unit 21 of the wearable device W.

In the position information acquisition process (step S30), the acquisition unit 30 acquires the position information of the seated occupant and passenger detected by the posture detection unit 22 of the wearable device W.

Furthermore, the control unit 8 acquires the biometric information, posture information, and position information from the wearable device W in real time.

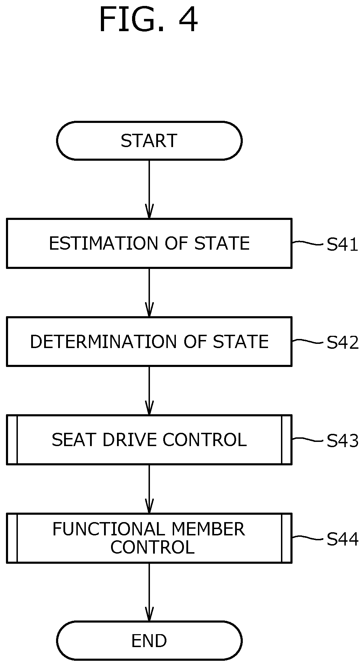

Next, the seat control process (step S40) will be described with reference to FIG. 4.

When the acquisition unit 30 acquires the biometric information, posture information, and position information, the control unit 8 estimates the state of the seated occupant and passenger by the emotion estimation unit 31, the physical condition estimation unit 32, the drinking estimation unit 33, the posture estimation unit 34, the blood pressure estimation unit 35, the fatigue estimation unit 36, and the drowsiness estimation unit 37 based on the biometric information, posture information, and position information (step S41). Then, the state of the seated occupant and passenger is determined (step S41), and the seat drive unit 6 is controlled according to the state of the seated occupant and passenger (step S43). Further, the functional member 7 is controlled according to the state of the seated occupant and passenger (step S44). The control unit 8 estimates the state of the seated occupant and passenger in real time based on the biometric information, posture information, and position information acquired from the wearable device W, and continuously determines the state of the seated occupant and passenger.

Furthermore, when the control unit 8 determines the state of the seated occupant and passenger, only the seat drive unit 6 may be driven or only the functional member 7 may be driven.

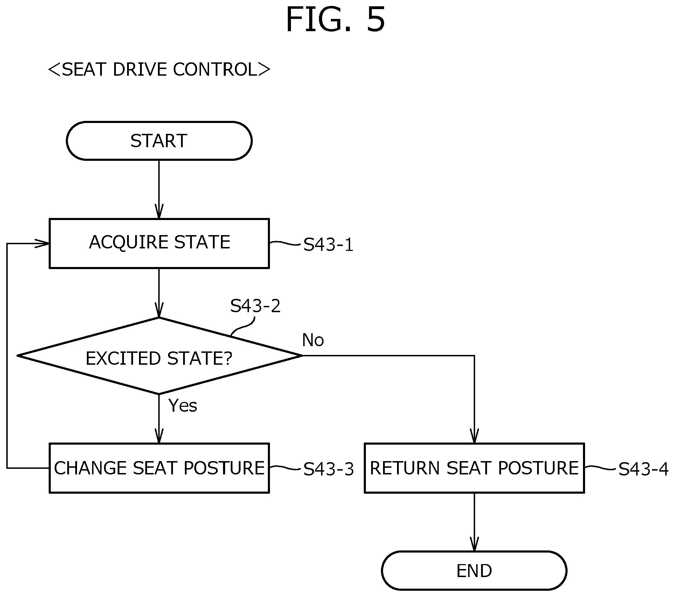

Next, the seat drive unit control process (step S43) will be described with reference to FIG. 5. In this description, an example of controlling the seat drive unit 6 based on the emotion index estimated by the emotion estimation unit 31 will be described.

The control unit 8 acquires the state of the seated occupant or passenger estimated by the emotion estimation unit 31 (step S43-1). When the emotion index is equal to or higher than the threshold value and indicates an excited state (step S43-2: Yes), the control unit 8 controls the seat drive unit 6 to change the posture of the seat body (step S43-3). Specifically, the control unit 8 changes the posture of the seat back 1, the seat cushion 2, and the ottoman 5 so that the seat body is flat. Further, when the emotion index does not indicate an excited state (step S43-2: No), the control unit 8 returns the seat body to an initial posture (step S43-4), and ends the process.

In this way, the control unit 8 changes the posture of the seat body until the emotion index is lower than the threshold value and does not indicate an excited state (in other words, in a relaxed state).

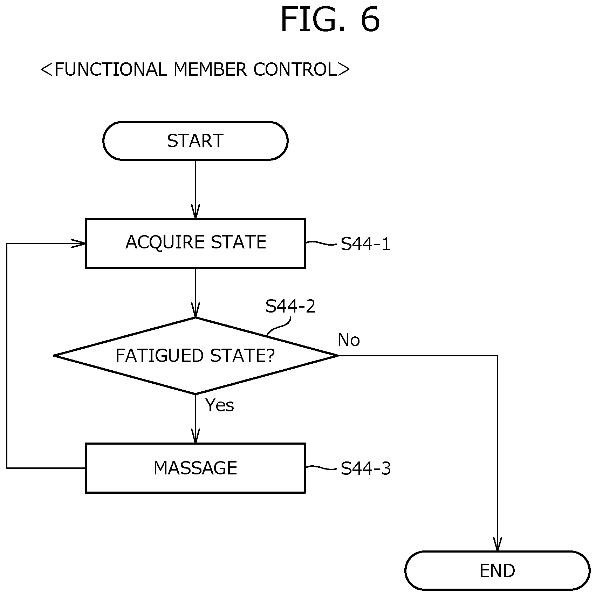

Next, the functional member control process (step S44) will be described with reference to FIG. 6. In this description, an example of controlling the movable portion 10 of the functional member 7 based on the fatigue level estimated by the fatigue estimation unit 36 will be described.

The control unit 8 acquires the state of the seated occupant or passenger estimated by the fatigue estimation unit 36 (step S44-1). When the fatigue level is equal to or higher than the threshold value and indicates a fatigued state (step S44-2: Yes), the control unit 8 controls the movable portion 10 of the functional member 7 to rock and knead the body of the seated occupant (step S43-3). Specifically, the control unit 8 massages the seated occupant by expanding and contracting the air cells of the movable portion 10. Further, when it is not in a fatigued state (step S44-2: No), the control unit 8 ends the process. Furthermore, the control unit 8 continuously determines the state of the seated occupant based on the biometric information acquired from the wearable device W and changes the intensity of the kneading program in real time.

In this way, the control unit 8 massages the seat body until the fatigue level becomes lower than the threshold value and the fatigued state is eliminated. Furthermore, the control unit 8 may perform control to prohibit the vehicle from traveling during a massage. In this case, the control unit 8 may perform control to permit the vehicle to travel when it is determined that the massage has ended and the user is no longer in a fatigued state.

With the above-described configuration, it is possible to control the seat drive unit 6 and the functional member 7 based on the biometric information, posture information, and position information acquired from the wearable device W. Thus, since it is possible to control the conveyance seat S according to the state of the seated occupant or passenger, it is possible to improve the comfort and convenience of the seated occupant and passenger.

Particularly, in the seat system S1 of this embodiment, the control unit 8 controls both the seat drive unit 6 and the functional member 7 according to the state of the seated occupant or passenger. Since the control unit 8 controls the functional member 7 while changing the posture of the seat body using the seat drive unit 6 according to the state of the seated occupant or passenger, it is possible to improve the comfort and convenience of the seated occupant more than when only the functional member 7 is driven.

Further, the control unit 8 can acquire biometric information, posture information and position information from the wearable device W in real time, and control the seat drive unit 6 and the functional member 7 in real time according to the condition of the seated occupant or passenger.

### <Second embodiment>

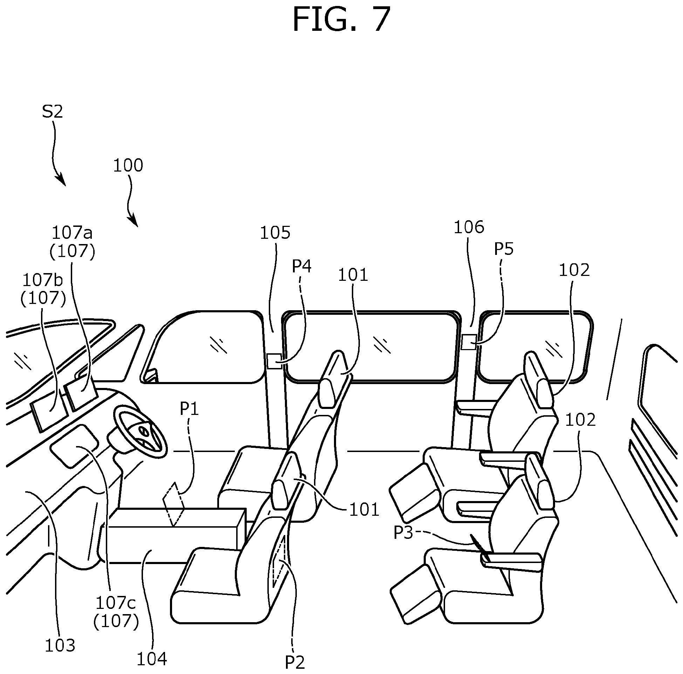

Hereinafter, a seat system S2 according to a second embodiment of the present invention will be described with reference to FIGS. 7 to 9.

The seat system S2 causes the position of the display operated by the occupant to be changed. Furthermore, description of configurations that overlap with those of the above-described seat system S1 will be omitted.

As shown in FIG. 7, a vehicle 100 equipped with the seat system S2 is an automobile having multiple rows of seat bodies. The vehicle 100 includes a front seat 101 disposed on the front side, a rear seat 102 disposed on the rear side of the front seat 101, an instrument panel 103, a console box 104, a front pillar 105, a rear pillar 106, and a display 107 operated by the occupant.

The display 107 is a touch panel type display device, and specifically, is a tablet terminal that can be used while being detached from the vehicle 100 or the seat body.

The display 107 includes a meter display 107a, a navigation display 107b, and an air conditioning display 107c.

Each of the meter display 107a, the navigation display 107b, and the air conditioning display 107c are provided to be attachable to and detachable from the instrument panel 103. The display 107 is detached from the instrument panel 103 and is attachable to attachment positions (P1 to P5) provided inside the vehicle 100.

Specifically, the first attachment position P1 is provided on the upper surface of the console box 104. The second attachment position P2 is provided on the rear surface of the front seat 101. The third attachment position P3 is provided on the armrest of the rear seat 102. The fourth attachment position P4 is provided on the front pillar 105. The fifth attachment position P5 is provided on the rear pillar 106.

When the vehicle 100 is traveling, the display 107 is provided in the instrument panel 103 and is disposed to be operated by the occupant seated on the front seat 101.

When the front seat 101 is moved backward or the occupant moves to the rear seat 102 in the stop state of the vehicle 100, the display 107 is moved from the instrument panel 103 to each attachment position that can be operated by the occupant and operated.

For example, when the vehicle 100 is stopped, the occupant can move the front seat 101 backward and operate the navigation system using the navigation display 107b while remaining seated on the front seat 101.

Further, when the vehicle 100 is stopped, the occupant can move to the rear seat 102 and operate the air conditioning using the air conditioning display 107c while remaining seated on the rear seat 102.

In this way, the display 107 can be attached at a position which can be easily operated by the occupant even when the vehicle 100 is stopped. Since the display 107 can be attached close to the occupant, the occupant does not need to reach out to operate the display 107, and the operability of the display 107 can be improved.

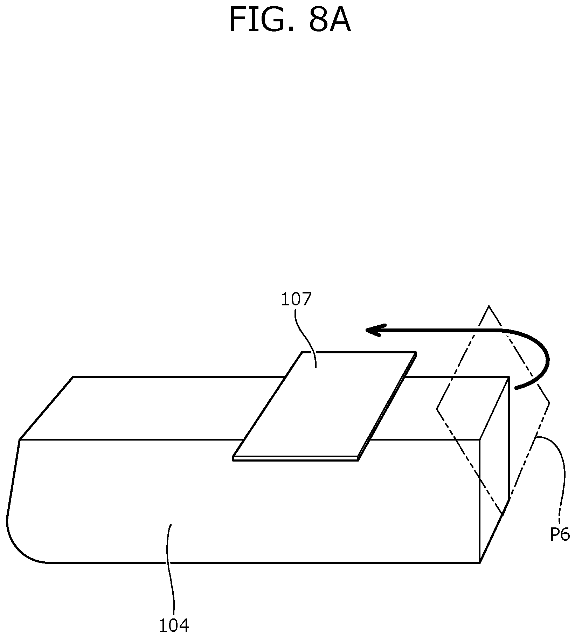

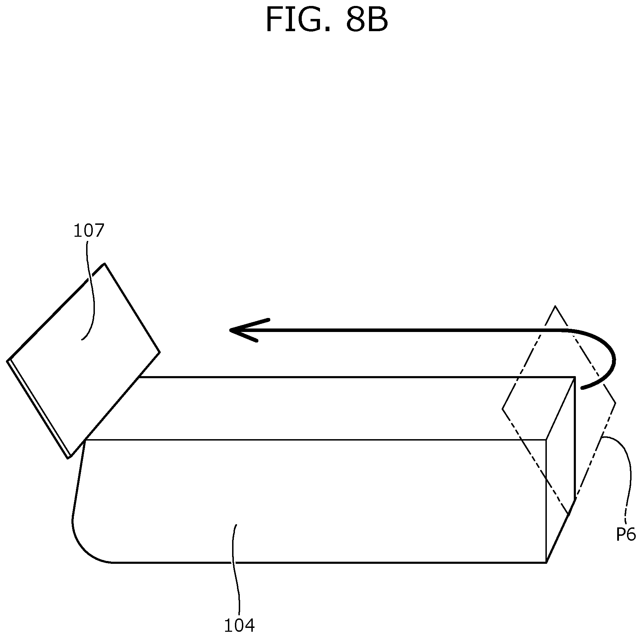

Further, the display 107 may be configured to be movable on the console box 104. Specifically, as shown in FIG. 8A, the display 107 may be moved from the sixth attachment position P6 operated by the occupant seated on the rear seat 102 to the center position on the upper surface of the console box 104. Further, as shown in FIG. 8B, the display 107 may be moved from the sixth attachment position P6 operated by the occupant seated on the rear seat 102 to the front end position on the upper surface of the console box 104.

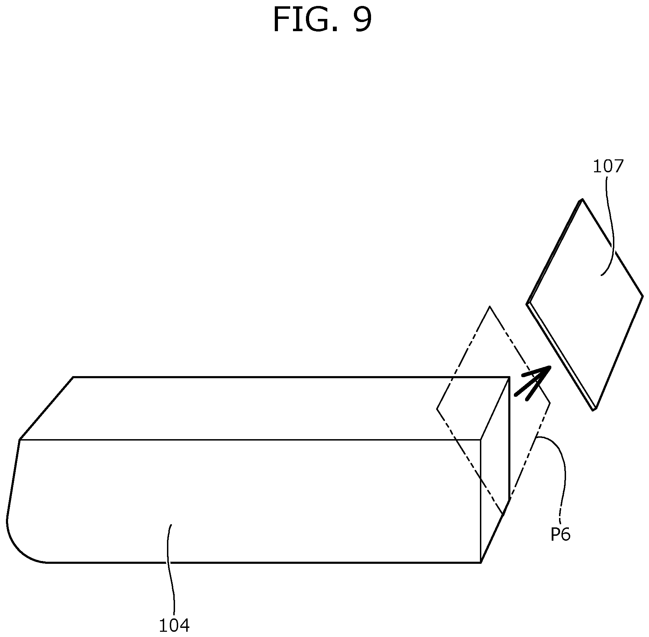

Further, the display 107 may be a touch panel with a built-in battery, so that the occupant can hold the touch panel in hand and operate the touch panel. Specifically, as shown in FIG. 9, the display 107 is detached from the sixth attachment position P6 operated by the occupant seated on the rear seat 102 and is operated by the occupant.

### <Third embodiment>

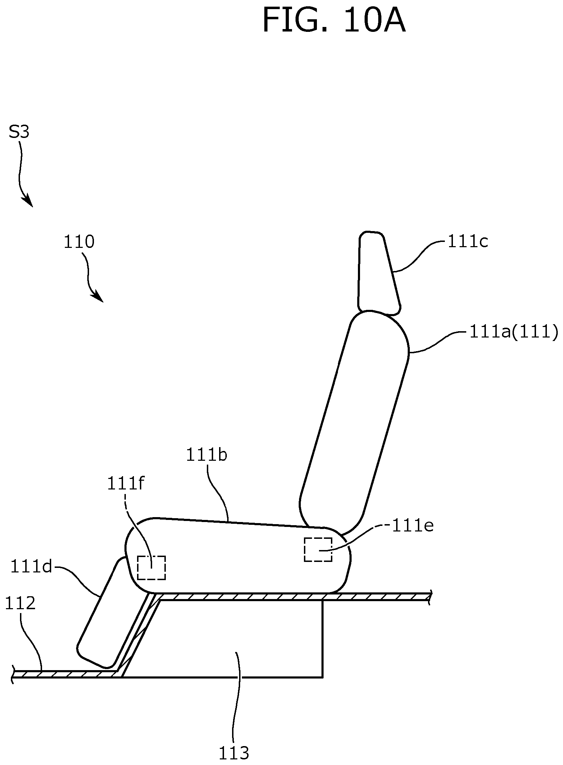

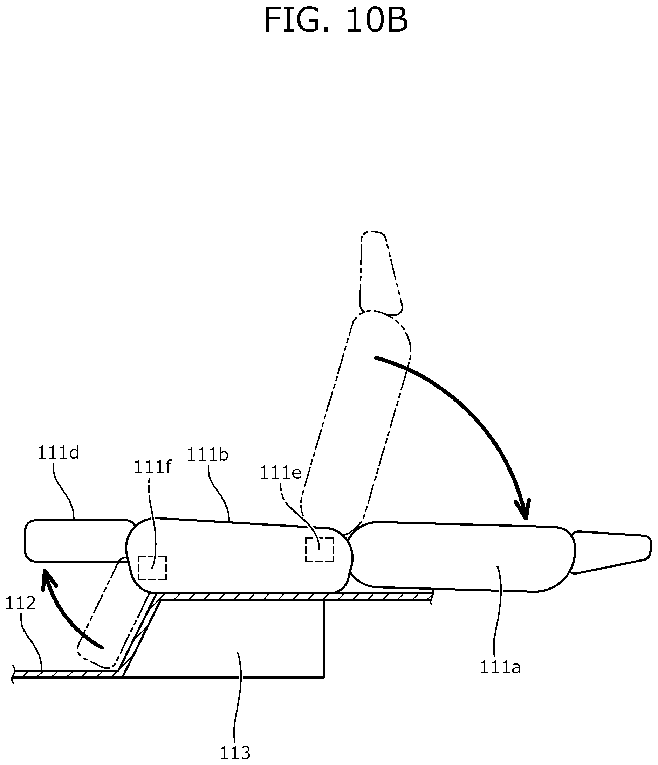

Hereinafter, a seat system S3 according to a third embodiment of the present invention will be described with reference to FIGS. 10A and 10B.

The seat system S3 causes the posture of the seat body to be changed. Furthermore, description of configurations that overlap with those of the above-described seat systems S1 and S2 will be omitted.

A vehicle 110 in which the seat system S3 is provided is an SUV (Sport Utility Vehicle) having multiple rows of seat bodies.

The vehicle 110 includes, as shown in FIG. 10A, a rear seat 111 which is disposed on the rear side, a floor 112 on which the rear seat 111 is disposed, and a space portion 113 which is provided below the floor 112. The space portion 113 is, for example, a space for accommodating a battery or a gasoline tank provided in an SUV.

The rear seat 111 includes, as shown in FIG. 10A, a seat back 111a, a seat cushion 111b, a headrest 111c, an ottoman 111d, a reclining device 111e rotatably connecting the seat back 111a to the seat cushion 111b, and a foot device 111f rotatably connecting the ottoman 111d to the seat cushion 111b.

The reclining device 111e is a device that rotatably connects the seat back 111a to the seat cushion 111b and is also capable of locking the seat back 111a.

The reclining device 111e is configured such that the occupant tilts the seat back 111a backward while the seat back 111a is in an unlocked state and the occupant releases a reclining operation lever when the backward tilt angle reaches a desired angle so that the seat back returns to a locked state.

The foot device 111f is a device that rotatably connects the ottoman 111d to the seat cushion 111b and is also capable of locking the ottoman 111d.

The foot device 111f is configured such that the occupant rotates the ottoman 111d upward while the ottoman 111d is in an unlocked state and the occupant releases a reclining operation lever when the rotation angle reaches a desired angle so that the ottoman returns to a locked state.

The seat back 111a and the ottoman 111d are rotated from a normal position (FIG. 10A) to a horizontal position (FIG. 10B) in which they are horizontal with respect to the seat cushion 111b. In this way, the occupant can take a relaxed posture on the seat body and rest his or her body.

In general, in an SUV, the rear seat 111 is disposed one step higher than the lower level of the floor 112 due to the space for accommodating the battery, etc. Therefore, the vehicle 110 can use the step in the floor 112 to make the rear seat 111 into a flat seat.

### <Fourth embodiment>

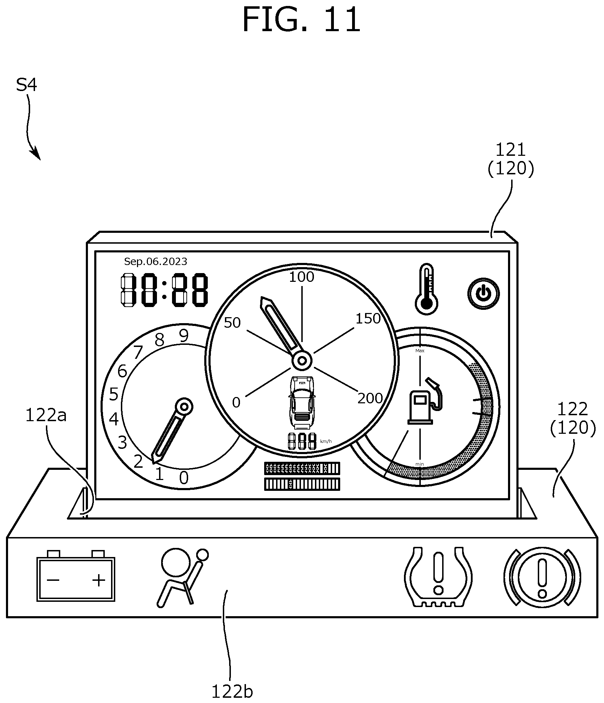

Hereinafter, a seat system S4 according to a fourth embodiment of the present invention will be described with reference to FIGS. 11 to 13.

The seat system S4 causes the position of the display device operated by the occupant to be changed. Furthermore, description of configurations that overlap with those of the above-described seat systems S1, S2, and S3 will be omitted.

The seat system S4 includes, as shown in FIG. 11, a display device 120 which is operated by the occupant. The display device 120 includes a display unit 121 which is operated by the occupant and a holding unit 122 which holds the display unit 121. The display device 120 is installed, for example, in an instrument panel of an SUV, and can display meters and the state of the vehicle.

The display unit 121 is a touch panel type display device, and is a tablet terminal that can be used while being detached from the holding unit 122. The display unit 121 displays meters while the vehicle is traveling. Further, the display unit 121 also serves as an operation panel that enables the operation of functional units (such as an air conditioner and a navigation system) provided in the vehicle.

The holding unit 122 includes an accommodation portion 122a which is provided inside the vehicle and accommodates the display unit 121 and a state display unit 122b which displays the state of the vehicle.

The accommodation portion 122a is a concave portion formed on the upper surface of the holding unit 122. The display unit 121 is detachably provided in the accommodation portion 122a.

The state display unit 122b is provided on the front surface of the holding unit 122 and indicates the state of the vehicle using an LED or the like.

The state display unit 122b visually displays the state of the vehicle in a warning ON mode that displays the state of the vehicle. Further, when the state display unit 122b is in a warning OFF mode that does not display the state of the vehicle, the state of the vehicle is not visible.

Furthermore, methods for making the state of the vehicle invisible include turning off the lights with LEDs and making the vehicle stealthier by using light-transmitting film.

As shown in FIG. 11, when the display unit 121 is accommodated in the accommodation portion 122a of the holding unit 122 in a warning ON mode, a meter is displayed on the screen of the display unit 121. At this time, the state display unit 122b notifies the occupant of the state of the vehicle using an LED or the like. Specifically, the state display unit 122b turns on the images of warnings and notification information. Further, the state display unit 122b turns on an image showing the state of charge of the vehicle battery or the state of a full tank of gasoline. Furthermore, the state display unit 122b turns on images that indicate the driving state, such as the speed and the indicators.

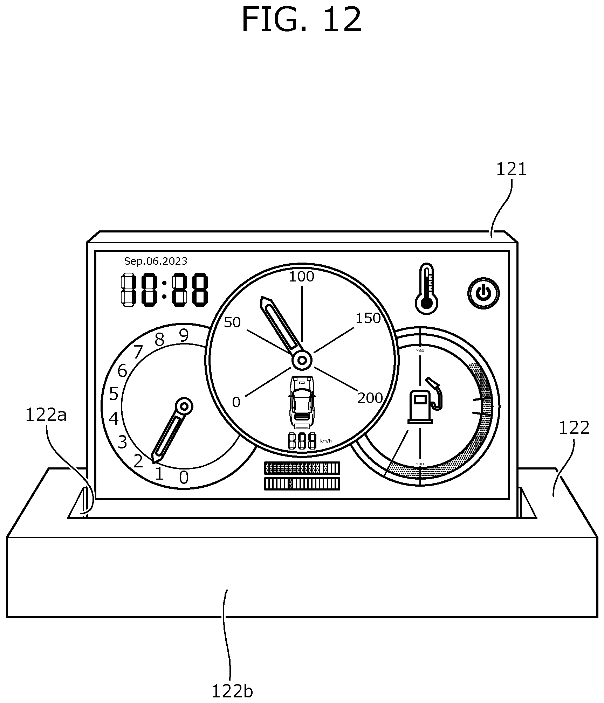

As shown in FIG. 12, when the display unit 121 is accommodated in the accommodation portion 122a of the holding unit 122 in a warning OFF mode, a meter is displayed on the screen of the display unit 121. At this time, the image showing the state of the vehicle in the state display unit 122b is turned off and becomes invisible.

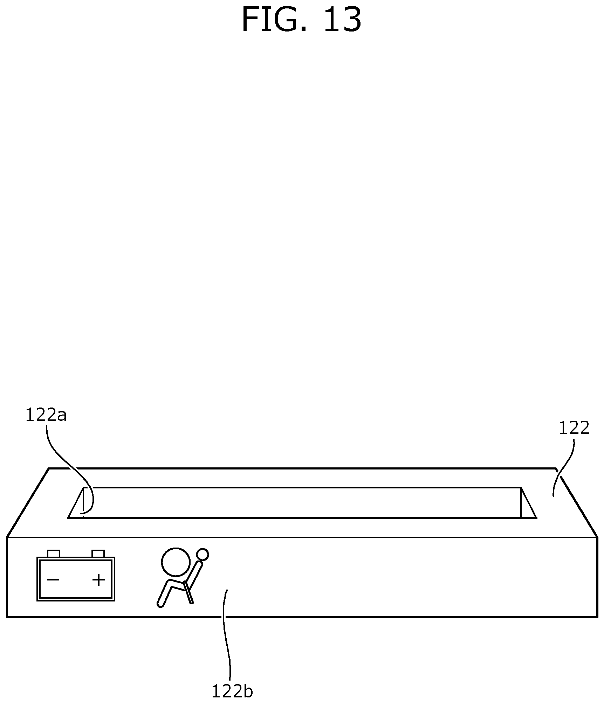

As shown in FIG. 13, when the display unit 121 is not accommodated in the accommodation portion 122a of the holding unit 122 in a warning ON mode, the state display unit 122b notifies the occupant of the state of the vehicle using an LED or the like.

In this way, since the display unit 121 that displays the meter can be used as an operation panel when the vehicle is stopped, the absence of the meter reduces the vehicle sensation. Thus, since the vehicle interior may look like a room in a house, it is possible to expand the range of ways in which the passenger compartment can be used while stopped.

Further, since the state display unit 122b mainly displays information required during driving, the state display unit is arranged in a location independent of the removable display unit 121. Since it is possible to make the state display unit 122b appear as if nothing is displayed on the state display unit by setting a warning OFF mode while the vehicle is stopped, it is possible to further reduce the vehicle sensation.

### <Fifth embodiment>

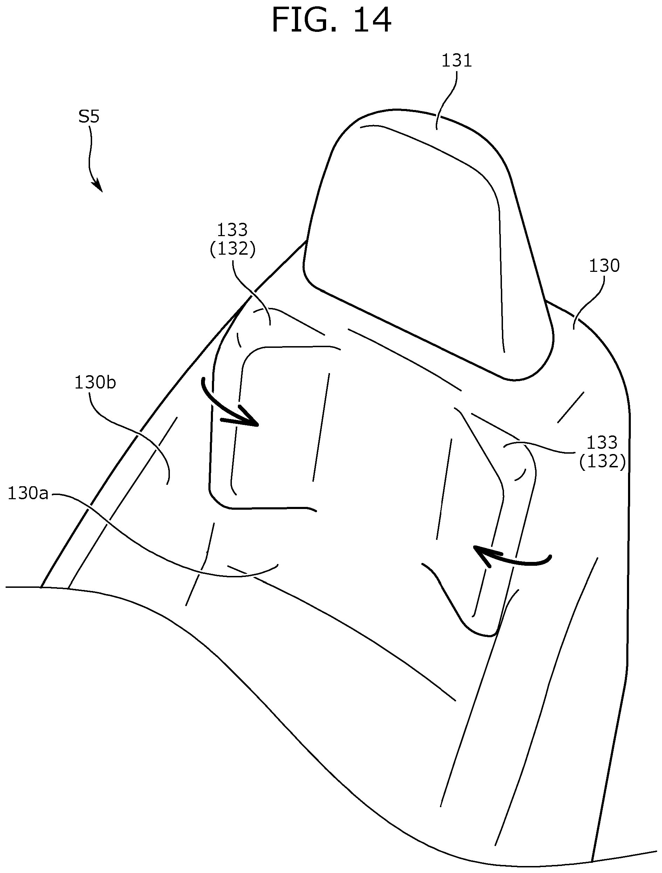

Hereinafter, a seat system S5 according to a fifth embodiment of the present invention will be described with reference to FIGS. 14 to 18B.

The seat system S5 causes the shape of the seat body to be changed. Furthermore, description of configurations that overlap with those of the above-described seat systems S1, S2, S3, and S4 will be omitted.

The seat system S5 includes, as shown in FIG. 14, a seat body having a seat back 130 and a headrest 131, and a seat movable portion 132 which moves a part of the seat body between a normal position and a protruding position protruding toward the occupant side in relation to the normal position. The seat back 130 includes a back center portion 130a which supports the occupant from behind and a bank portion 130b which supports the occupant from the side.

The seat movable portion 132 is provided inside the seat back 1 and serves as a pillow when the occupant takes a sleeping posture. The seat movable portion 132 is, for example, an air cell that operates to cause both end parts 133 in the back center portion 130a of the seat back 130 to protrude forward.

Furthermore, the seat movable portion 132 may be configured to operate by a mechanical mechanism (such as a link mechanism or a hinge mechanism).

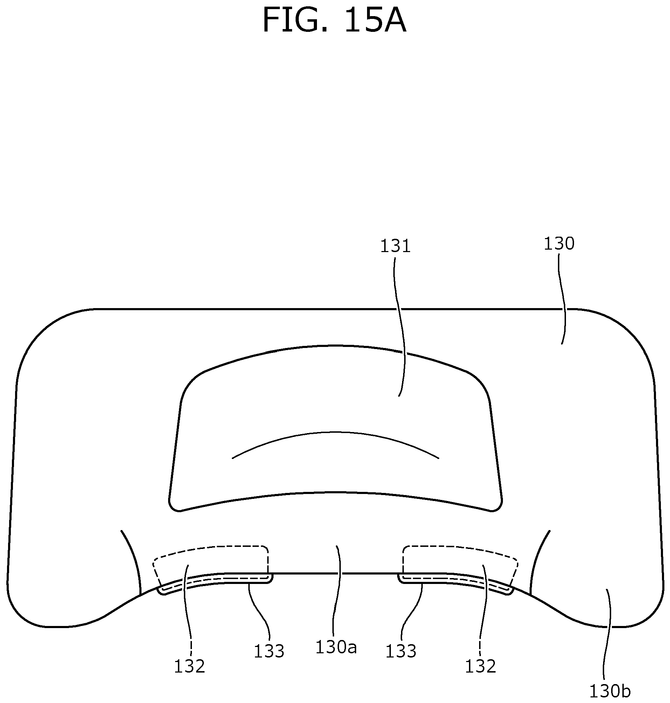

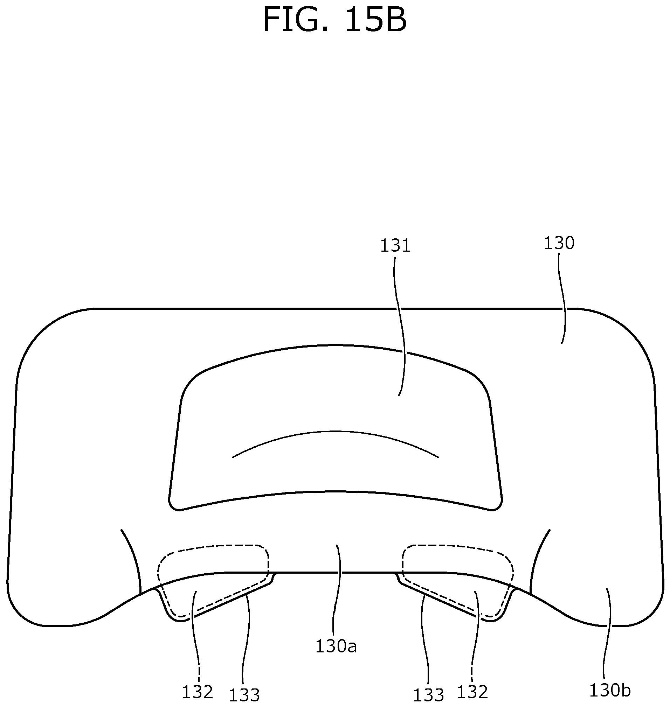

The seat movable portion 132 moves both end parts 133 of the back center portion 130a from a normal position (FIG. 15A) to a protruding position (FIG. 15B) when the seat back 130 is tilted backward by a reclining device (not shown). Then, both end parts 133 of the back center portion 130a serve as pillow portions for supporting the head of the occupant by the seat movable portion 132.

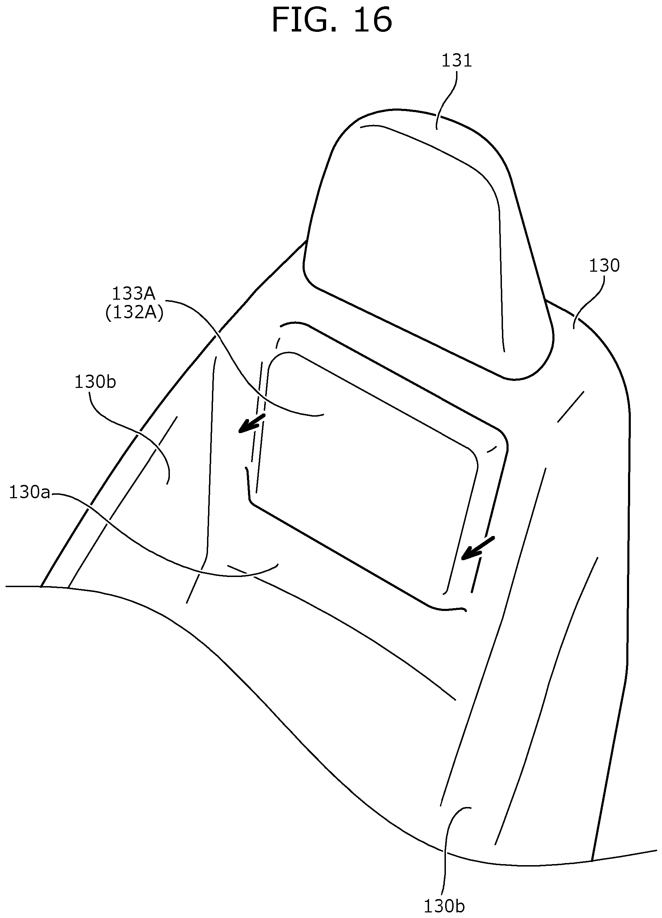

Next, a seat movable portion 132A of a first modified example shown in FIG. 16 will be described. The seat movable portion 132A is, for example, an air cell that causes a center part 133A of the back center portion 130a of the seat back 130 to protrude forward.

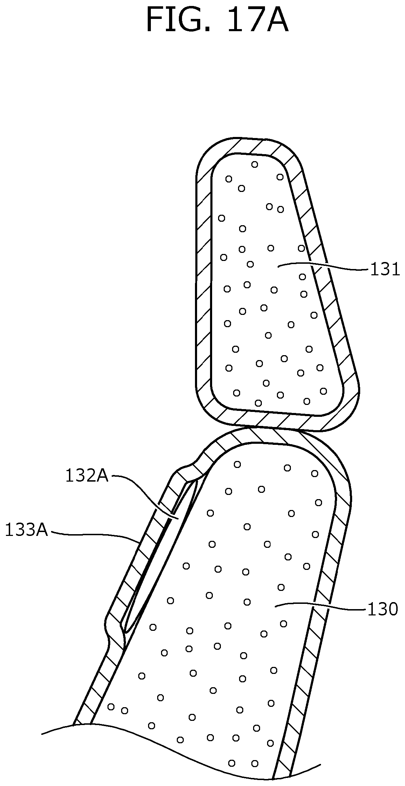

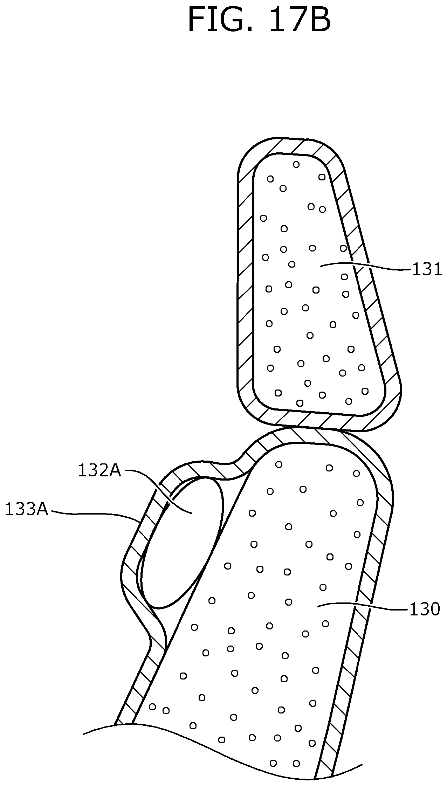

The seat movable portion 132A moves the center part 133A of the back center portion 130a from a normal position (FIG. 17A) to a protruding position (FIG. 17B) when the seat back 130 is tilted backward by a reclining device (not shown) . Then, the center part 133A of the back center portion 130a serves as a pillow portion for supporting the head of the occupant by the seat movable portion 132A.

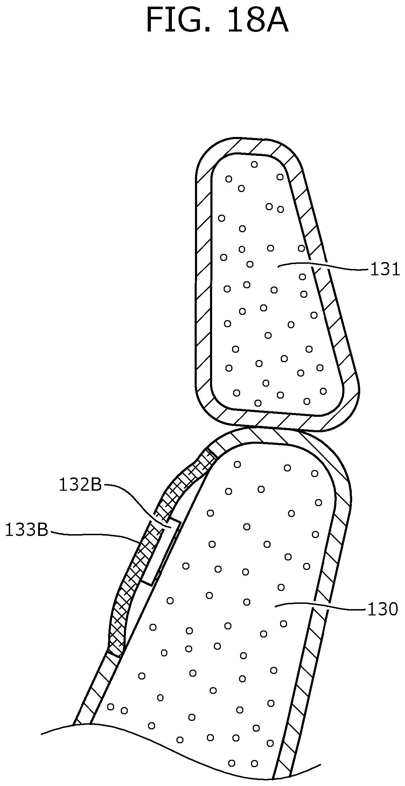

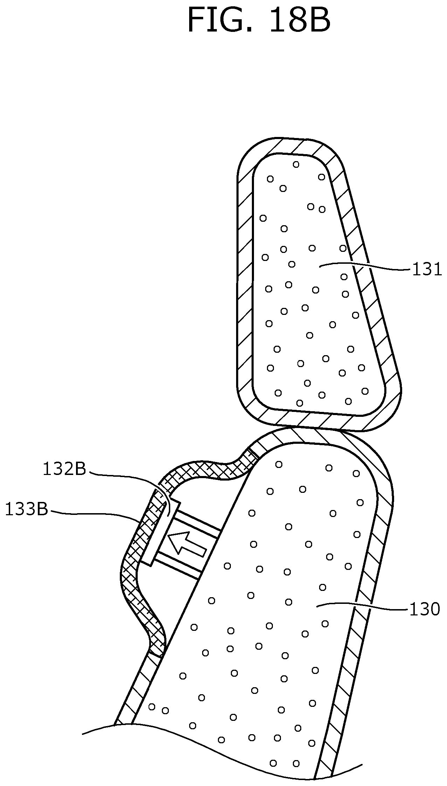

Next, a seat movable portion 132B of a second modified example shown in FIGS. 18A and 18B will be described. The seat movable portion 132B is, for example, a pressing mechanism that operates to cause a cushion part 133B in the back center portion 130a of the seat back 130 to protrude forward.

The cushion part 133B is a cushion portion made of a material softer than the skin of the seat back 130. Furthermore, the seat movable portion 132B is not limited to a pressing mechanism, and may be configured to inflate the cushion part 133B by blowing air. The cushion part 133B is made of a material that is softer than the skin, and therefore is easily inflated. Therefore, the force that causes the cushion part 133B to protrude forward can be reduced.

The seat movable portion 132B moves the cushion part 133B of the back center portion 130a from a normal position (FIG. 18A) to a protruding position (FIG. 18B) when the seat back 130 is tilted backward by a reclining device (not shown) . Then, the cushion part 133B of the back center portion 130a serves as a pillow portion for supporting the head of the occupant by the seat movable portion 132B.

In this way, since the occupant can use both end parts 133 of the back center portion 130a protruding due to the seat movable portion 132 as a pillow when the seat back 130 is tilted backward, it becomes easier to assume a sleeping posture. Further, since the head of the occupant is fixed by both end parts 133 in the sleeping posture, it becomes easier for the occupant to operate a smartphone in the sleeping posture.

Further, since the seat movable portion 132 is provided in the seat back 130, it becomes easier to support the head of the occupant when titling the seat back 130 backward even when the seat movable portion 132 is provided in the headrest 131. Further, when the seat movable portion 132 is electrically operated and requires wiring, the degree of freedom in the wiring layout can be improved.

### <Sixth embodiment>

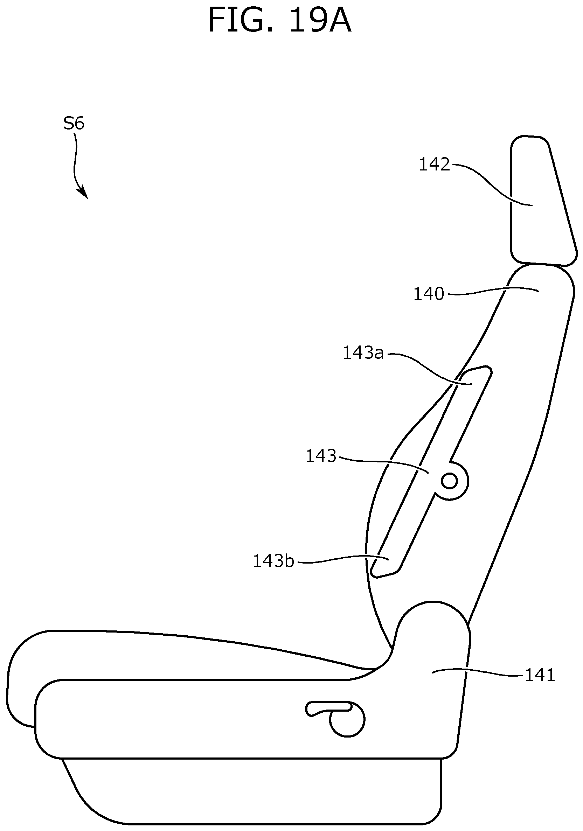

Hereinafter, a seat system S6 according to a sixth embodiment of the present invention will be described with reference to FIGS. 19A to 19C.

The seat system S6 causes the position of the armrest of the seat body to be changed. Furthermore, description of configurations that overlap with those of the above-described seat systems S1, S2, S3, S4, and S5 will be omitted.

The seat system S6 includes, as shown in FIG. 19A, a seat body having a seat back 140, a seat cushion 141, a headrest 142, and an elbow rest 143.

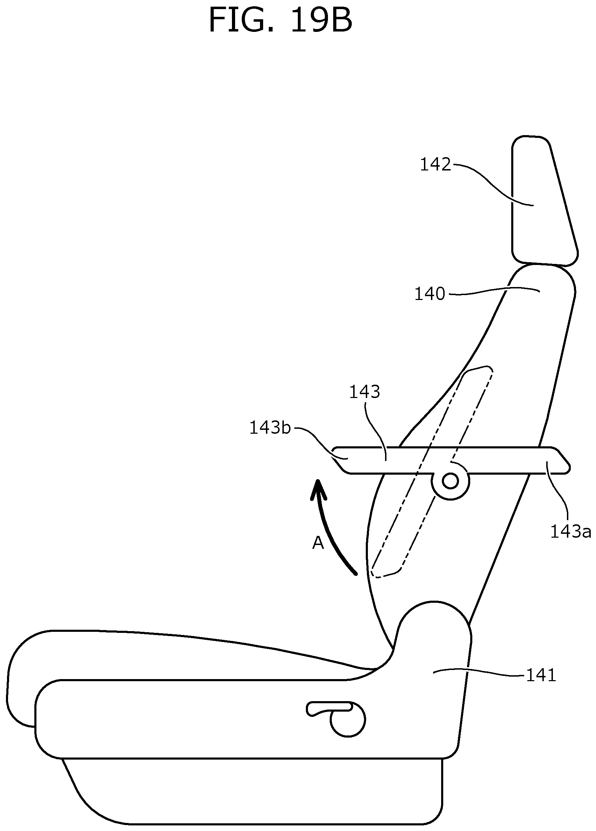

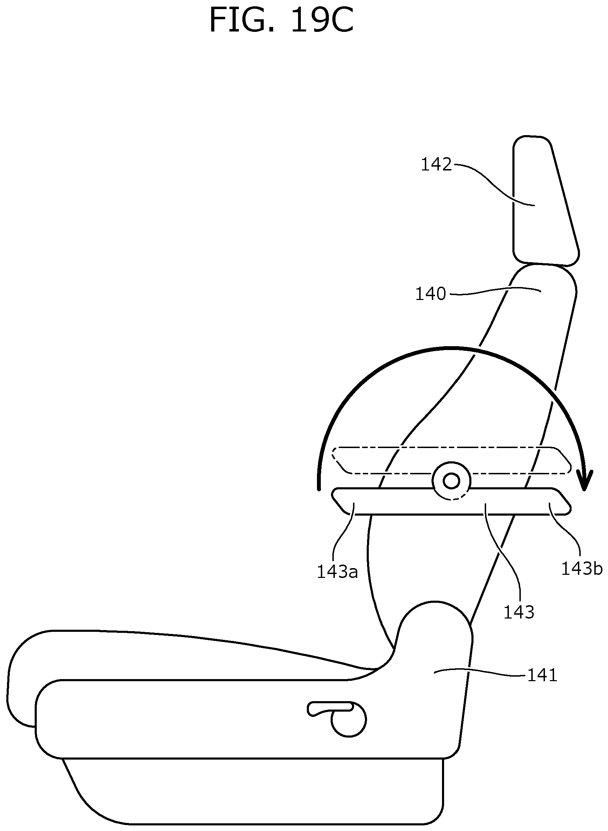

The elbow rests 143 are attached to both side surfaces of the seat back 140 and are simple armrests that support the elbows of the occupant. The elbow rest 143 is rotatably attached to the seat back 140 and can be switched among a storage state (FIG. 19A), a first usage state (FIG. 19B), and a second usage state (FIG. 19C). The occupant can adjust the height position of the elbow rest 143 by switching the elbow rest 143 from the storage state to the first usage state or the second usage state.

As shown in FIG. 19A, in the storage state, the elbow rest 143 is disposed at a position that overlaps with the seat back 140 in the side view. Specifically, a first end 143a which is the upper end of the elbow rest 143 in the storage state and a second end 143b which is the lower end of the elbow rest 143 in the storage state are arranged at the positions overlapping with the seat back 140 in the side view.

The occupant can store the elbow rest 143 in the seat back 140 by rotating the elbow rest 143 relative to the seat back 140 when the elbow rest 143 is not used.

As shown in FIG. 19B, in the first usage state, the elbow rest 143 is disposed horizontally at the center position in the up and down direction of the seat back 140. Specifically, the elbow rest 143 is rotated backward from the storage state, and is disposed so that the first end 143a of the elbow rest 143 faces backward and the second end 143b faces forward.

When using the elbow rest 143, the occupant can deploy and use the elbow rest 143 by rotating the elbow rest 143 relative to the seat back 140. Furthermore, the length of the elbow rest 143 is short enough to rest the elbow of the occupant.

As shown in FIG. 19C, in the second usage state, the elbow rest 143 is disposed horizontally at a lower position in the up and down direction of the seat back 140. Specifically, the elbow rest 143 is rotated 180 degrees from the first usage state, and is positioned so that the first end 143a of the elbow rest 143 faces forward and the second end 143b faces backward.

The occupant can adjust the height position of the elbow rest 143 by rotating the elbow rest 143 relative to the seat back 140 when changing the height of the elbow rest 143.

The elbow rest 143 is rotatable in only one direction, clockwise (direction A in FIG. 19B), and is restricted from rotating counterclockwise by being locked. By restricting rotation in this way, the strength of the elbow rest 143 can be improved.

In this way, the height can be changed in two height stages by shortening the length of the elbow rest 143 and providing the elbow rest to be rotatable relative to the seat back 140. Therefore, the height of the elbow rest 143 can be adjusted to suit the occupant's physique.

### <Seventh embodiment>

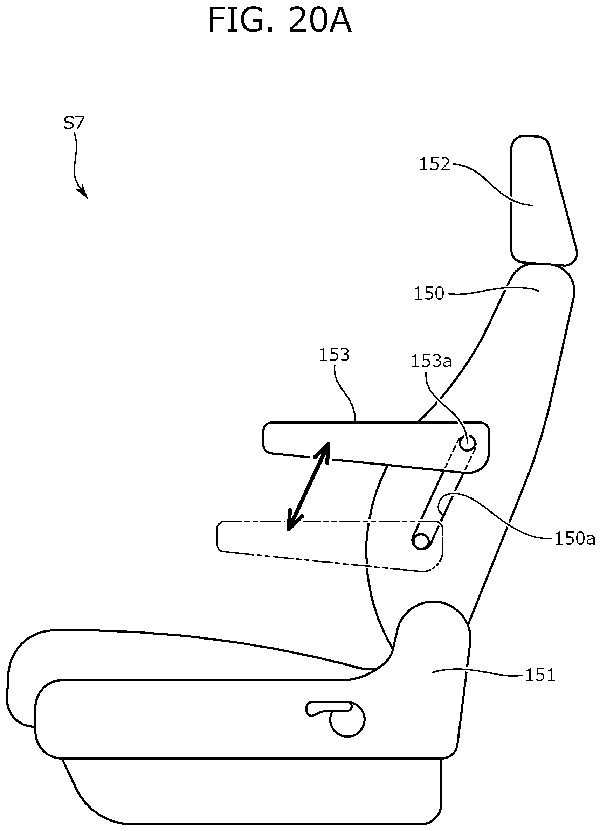

Hereinafter, a seat system S7 according to a seventh embodiment of the present invention will be described with reference to FIGS. 20A to 21B.

The seat system S7 causes the position of the armrest of the seat body to be changed. Furthermore, description of configurations that overlap with those of the above-described seat systems S1, S2, S3, S4, S5, and S6 will be omitted.

The seat system S7 includes, as shown in FIG. 20A, a seat body having a seat back 150, a seat cushion 151, a headrest 152, and a movable armrest 153.

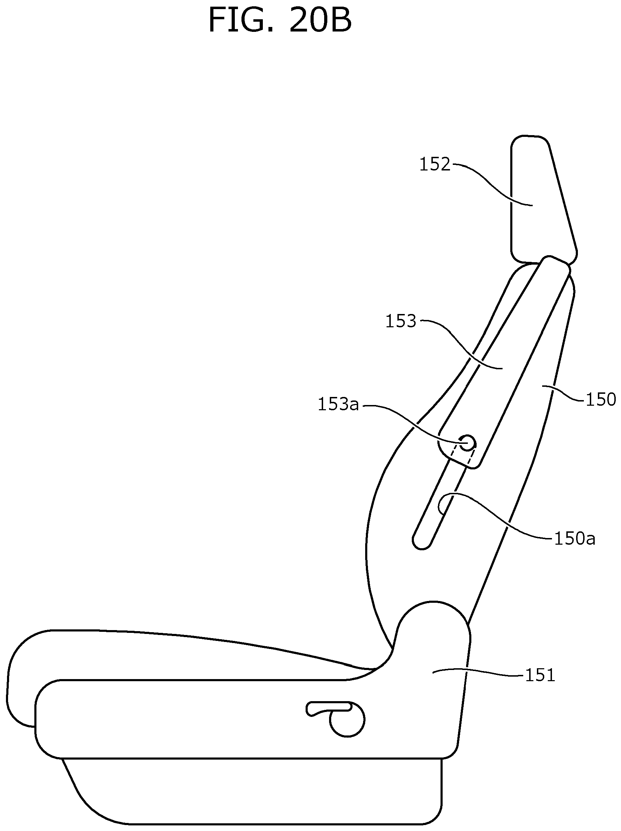

The movable armrests 153 are attached to both sides of the seat back 150 and serve to support the elbows of the occupant. The movable armrest 153 is attached to the seat back 150 so as to be movable up and down, and can be switched among a usage state (FIG. 20A), a first storage state (FIG. 20B), and a second storage state (FIG. 19C). The occupant can adjust the height position of the movable armrest 153 by raising and lowering the movable armrest 153 relative to the seat back 150 in the usage state. By rotating the movable armrest 153 relative to the seat back 150 from the usage state, the movable armrest can be switched to the first storage state or the second storage state.

As shown in FIG. 20A, the movable armrest 153 is attached to the seat back 150 so that a support shaft 153a provided at the rear end in the usage state is movable up and down along a guide groove 150a formed in the seat back 150.

Specifically, in the usage state, the movable armrest 153 can be switched between a first position in which the movable armrest is horizontal at the center position in the up and down direction of the seat back 150, and a second position in which the movable armrest is horizontal at a lower position in the up and down direction.

Further, as shown in FIG. 20B, the movable armrest 153 is switched from the first position in the usage state to the first storage state in which the movable armrest is stored at an upper position of the seat back 150 by being rotated backward about the support shaft 153a.

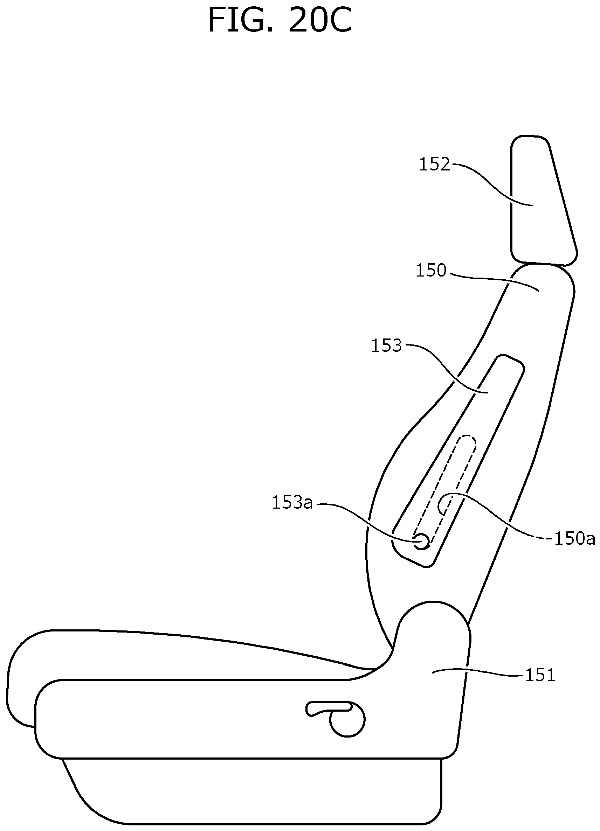

Furthermore, as shown in FIG. 20C, the movable armrest 153 is switched from the second position in the usage state to the second storage state in which the movable armrest is stored in a lower position of the seat back 150 by being rotated backward about the support shaft 153a.

Furthermore, the first storage state and the second storage state may be configured to be switchable by raising and lowering the seat back 150 along the guide groove 150a formed in the seat back.

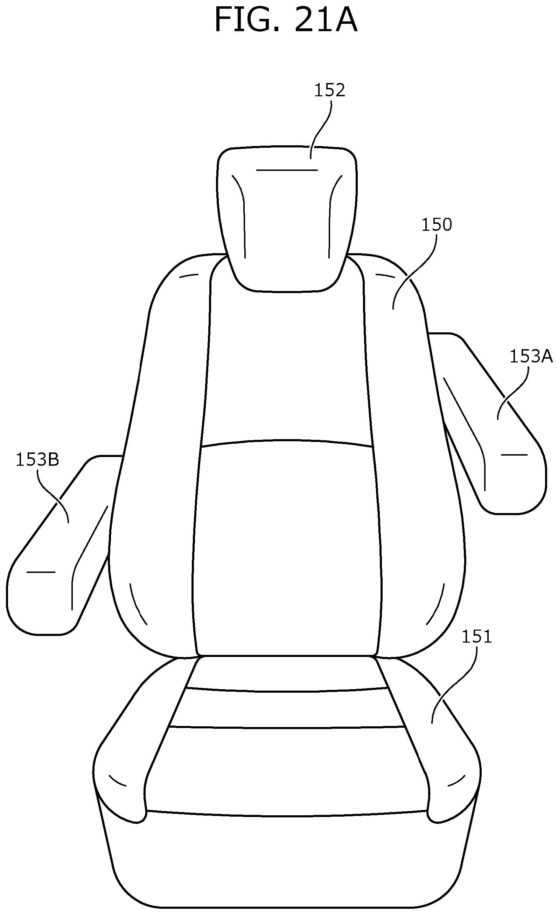

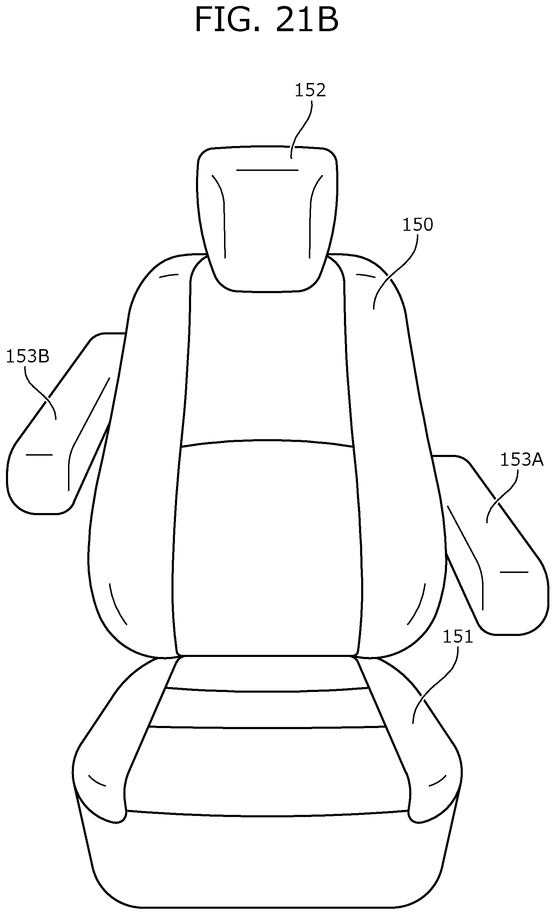

The movable armrest 153 includes, as shown in FIGS. 21A and 21B, a left armrest 153A attached to the left side surface of the seat back 150 and a right armrest 153B attached to the right side surface of the seat back 150. The left armrest 153A and the right armrest 153B can be operated independently.

As shown in FIG. 21A, the occupant can dispose the left armrest 153A at a higher position than the right armrest 153B. Further, as shown in FIG. 21B, the occupant can dispose the right armrest 153B at a higher position than the left armrest 153A.

In this way, the height of the movable armrest 153 can be adjusted to suit the physique of the occupant by making the movable armrest 153 movable up and down and rotatable.

In the above-described embodiments, a conveyance seat used in an automobile has been described as a specific example, but the present invention is not particularly limited thereto. For example, the conveyance seat can be used for a variety of seats, including motorcycle seats for motorcycles, conveyance seats for trains and buses, conveyance seats for airplanes and ships, as well as office chairs for work, wheelchairs, and child seats in shopping carts.

In this embodiment, the conveyance seat according to the present invention has been mainly described.

However, the above-described embodiments are merely examples for facilitating understanding of the present invention, and are not intended to limit the present invention. The present invention can be modified or improved without departing from the spirit thereof, and the present invention naturally includes equivalents thereof.

### REFERENCE SIGNS LIST

S1, S2, S3, S4, S5, S6, S7: seat system
S**:** conveyance seat
W: wearable device
SP: mobile terminal
1, 111a, 130, 140, 150: seat back
2, 111b, 141, 151: seat cushion
3, 111c: headrest
4: armrest
5, 111d: ottoman
6: seat drive unit
   6a: height link drive unit
   6b: reclining drive unit
   6c: tilt drive unit
   6d: foot drive unit
7: functional member
8: control unit
9: communication unit
10: movable portion
11: sound output unit
12: vibration unit
13: air conditioning unit
14: notification unit
15: display unit
20: biosensor
21: position detection unit
22: posture detection unit
23: device communication unit
30: acquisition unit
31: emotion estimation unit
32: physical condition estimation unit
33: drinking estimation unit
34: posture estimation unit
35: blood pressure estimation unit
36: fatigue estimation unit
37: drowsiness estimation unit
100, 110: vehicle
101: front seat
102, 111: rear seat
103: instrument panel
104: console box
105: front pillar
106: rear pillar
107: display
   107a: meter display
   107b: navigation display
   107c: air conditioning display
111e: reclining device
111f: foot device
112: space portion
120: display device
121: display unit
122: holding unit
122a: accommodation portion
122b: state display unit
130a: back center portion
130b: bank portion
132, 132A, 132B: seat movable portion
133: both end parts
133A: center part
133B: cushion part
143: elbow rest
   143a: first end
   143b: second end
   150a: guide groove
153: movable armrest
153A: left armrest
153B: right armrest
   153a: support shaft

## Claims

1. A seat system, comprising:
a conveyance seat which includes a seat body; and
a wearable device which is worn by a seated occupant and detects biometric information of the seated occupant,
wherein the conveyance seat includes the seat body which has a seat back, a seat cushion, and a headrest, a seat drive unit which changes the posture of the seat back and the seat cushion, a functional member that is provided in the seat body, and a control unit which controls the seat drive unit and the functional member,
wherein the functional member is at least one of a movable portion which moves a part of the seat body between a normal position and a protruding position protruding toward the seated occupant side in relation to the normal position, a sound output unit which outputs sound, a vibration unit which applies a vibration to the seated occupant, and an air conditioning unit which blows air toward the seated occupant, and
wherein the control unit includes an acquisition unit which acquires the biometric information acquired from the wearable device and controls the seat drive unit and the functional member based on the biometric information acquired by the acquisition unit.

2. The seat system according to claim 1,
wherein the functional member is the air conditioning unit provided in the seat back or the seat cushion, and
wherein the control unit includes an emotion estimation unit which estimates the emotion of the seated occupant based on the biometric information acquired by the acquisition unit, and controls the air conditioning unit to emit a fragrance toward the seated occupant when an emotion index of the seated occupant estimated by the emotion estimation unit is equal to or higher than a threshold value.

3. The seat system according to claim 1,
wherein the functional member is the air conditioning unit provided in the seat back or the seat cushion, and
wherein the control unit includes a physical condition estimation unit which estimates a physical condition of the seated occupant based on the biometric information acquired by the acquisition unit, and controls the air conditioning unit to blow cool air or warm air toward the seated occupant when the physical condition index of the seated occupant estimated by the physical condition estimation unit is equal to or higher than a first threshold value.

4. The seat system according to claim 3,
wherein the functional member includes a notification unit which is provided in the seat body or a vehicle equipped with the seat body to make an emergency notification to the outside of the vehicle, and
wherein the control unit controls the notification unit to make the emergency notification to the outside of the vehicle when the physical condition index of the seated occupant estimated by the physical condition estimation unit is equal to or higher than a second threshold value higher than the first threshold value.

5. The seat system according to claim 1,
wherein the functional member is the sound output unit provided in the headrest, and
wherein the control unit includes an emotion estimation unit which estimates the emotion of the seated occupant based on the biometric information acquired by the acquisition unit, and controls the sound output unit to output a voice related to an emotion index of the seated occupant when the emotion index of the seated occupant estimated by the emotion estimation unit is equal to or higher than a threshold value.

6. The seat system according to claim 1,
wherein the functional member is the sound output unit provided in the headrest,
wherein the wearable device includes a position detection unit which detects position information of the seated occupant,
wherein the acquisition unit acquires the position information of the seated occupant from the position detection unit, and
wherein the control unit includes a drinking estimation unit which estimates a drinking level of the seated occupant based on heart rate information as the biometric information and the position information acquired by the acquisition unit, and controls the sound output unit to output a voice related to the drinking level of the seated occupant when the drinking level of the seated occupant estimated by the drinking estimation unit is equal to or higher than a threshold value.

7. The seat system according to claim 1,
wherein the functional member is the movable portion provided in the seat back or the seat cushion,
wherein the wearable device includes a posture detection unit which detects posture information of the seated occupant,
wherein the acquisition unit acquires the posture information of the seated occupant from the posture detection unit, and
wherein the control unit includes a posture estimation unit which estimates a seated posture of the seated occupant based on the posture information acquired by the acquisition unit, and controls the movable portion to rock or knead a body of the seated occupant when the seated posture of the seated occupant estimated by the posture estimation unit remains the same for a predetermined period of time.

8. The seat system according to claim 1,
wherein the functional member is the movable portion provided in the seat back or the seat cushion, and
wherein the control unit includes a blood pressure estimation unit which estimates a blood pressure index of the seated occupant based on blood pressure as the biometric information acquired by the acquisition unit, and controls the movable portion to rock or knead a body of the seated occupant when the blood pressure index of the seated occupant estimated by the blood pressure estimation unit is equal to or higher than a threshold value.

9. The seat system according to claim 1,
wherein the functional member is the movable portion provided in the seat back or the seat cushion, and
wherein the control unit includes a fatigue estimation unit which estimates a fatigue level of the seated occupant based on a blood oxygen concentration as the biometric information acquired by the acquisition unit, and controls the movable portion to rock or knead a body of the seated occupant when the fatigue level of the seated occupant estimated by the fatigue estimation unit is equal to or higher than a threshold value.

10. The seat system according to claim 1, further comprising:
a second wearable device which is worn by a passenger riding in a vehicle equipped with the seat body and detects biometric information of the passenger,
wherein the functional member includes a display unit which is provided in the seat body or the vehicle and displays information to the seated occupant, and
wherein the control unit includes an emotion estimation unit which estimates the emotion of the passenger based on the biometric information of the passenger acquired by the acquisition unit, and controls the display unit to display the emotion of the passenger estimated by the emotion estimation unit.
